# EUROPEAN PATENT APPLICATION

(11) **EP 3 592 042 A1**
(43) Date of publication of application: **08.01.2020**
(21) Application number: 18758410.7
(22) Date of filing: 17.01.2018
(51) Int. Cl.: H04W 48/18, H04W 68/12, H04W 84/00

(54) **TERMINAL DEVICE, BASE STATION, CONTROL DEVICE, METHOD AND RECORDING MEDIUM**

(30) Priority: 27.02.2017 JP 2017035273
(71) Applicant: Sony Corporation, Tokyo 108-0075 (JP)
(72) Inventor: TAKANO, Hiroaki, Tokyo 108-0075 (JP)
(74) Representative: Witte, Weller & Partner Patentanwälte mbB
(86) International application number: PCT/JP2018/001081
(87) International publication number: WO 2018/155007

(57) **Abstract**

To provide a mechanism capable of efficiently operating a plurality of forms of communication coping with various use cases.

A terminal device includes a communication control unit that controls communication with a communication system which provides one or more logical networks for respectively providing communication services different from each other, an acquisition unit that acquires information regarding the logical network which is providable by the communication system, and a selection unit that selects the communication system to be connected on the basis of the information regarding the logical network.

## Description

### TECHNICAL FIELD

The present disclosure relates to a terminal device, a base station, a control device, a method, and a recording medium.

### BACKGROUND ART

A wireless access method and a wireless network for cellular mobile communication (referred to as "Long Term Evolution (LTE)", "LTE-Advanced (LTE-A)", "LTE-Advanced Pro (LTE-A Pro)", "fifth generation (5G)", "New Radio (NR)", "New Radio Access Technology (NRAT)", "Evolved Universal Terrestrial Radio Access (EUTRA)",or "Further EUTRA (FEUTRA)") have been considered in the 3rd Generation Partnership Project (3GPP). Note that, in the following description, the LTE includes the LTE-A, the LTE-A Pro, and the EUTRA, and the NR includes the NRAT and the FEUTRA. In the LTE and the NR, a base station device (base station) is referred to as an evolved NodeB (eNodeB), and a terminal device (mobile station, mobile station device, and terminal) is referred to as User Equipment (UE). The LTE and the NR are cellular communication systems in which a plurality of areas covered by the base station device is arranged in a cell-like shape. A single base station device may manage a plurality of cells.

The NR is Radio Access Technology (RAT) different from the LTE as a next-generation wireless access method relative to the LTE. The NR is access technology which can cope with various use cases including an Enhanced mobile broadband (eMBB), Massive machine type communications (mMTC), and Ultra reliable and low latency communications (URLLC). The NR is considered to be a technical framework coping with a usage scenario, requirements, an arrangement scenario, and the like in these use cases.

For example, regarding the NR, slicing technology in which a plurality of forms of communication coping with various use cases is contained in a single network has been examined. According to the slicing technology, logical networks referred to as slices can coexist in a single physical network. Regarding the slicing technology, for example, in Non-Patent Document 1, technology is disclosed in which when a terminal device is connected to a base station by using a common slice set to be connected by default, a side of a network determines which slice is used to communicate with the terminal device.

### CITATION LIST

### NON-PATENT DOCUMENT

Non-Patent Document 1: ZTE Corporation, "Network Slice Selection Procedure", R3-161107, 3GPP TSG RAN WG3 Meeting #92, 23th-27th May 2016, Nanjing, China

### SUMMARY OF THE INVENTION

### PROBLEMS TO BE SOLVED BY THE INVENTION

However, the technology described in Non-Patent Document 1 has been inefficient because at least the common slice is set, it is required that communication using the common slice is temporarily performed, and the like.

Therefore, the present disclosure provides a mechanism capable of efficiently operating a plurality of forms of communication coping with various use cases.

### SOLUTIONS TO PROBLEMS

According to the present disclosure, a terminal device is provided which includes a communication control unit that controls communication with a communication system which can provide one or more logical networks for respectively providing communication services different from each other, an acquisition unit that acquires information regarding the logical network which can be provided by the communication system, and a selection unit that selects the communication system to be connected on the basis of the information regarding the logical network.

Furthermore, according to the present disclosure, a base station is provided which includes a communication control unit that controls communication with a terminal device which receives provision of the logical network selected from among one or more logical networks for respectively providing providable communication services different from each other and a notification unit that notifies the terminal device of information regarding the logical network which can be provided used by the terminal device to select a connection destination.

Furthermore, according to the present disclosure, a control device is provided which includes a communication control unit that controls communication of a terminal device which receives provision of the logical network selected from among one or more logical networks for respectively providing providable communication services different from each other and a notification unit that notifies the terminal device of the information regarding the logical network which can be provided used by the terminal device to select a connection destination via a base station.

Furthermore, according to the present disclosure, a base station is provided which includes a communication control unit that controls communication with a terminal device which receives provision of the logical network selected from among one or more logical networks for respectively providing providable communication services different from each other, in which the communication control unit transmits a paging message to the terminal device by using the logical network corresponding to the terminal device in a case where the terminal device is in an idle mode.

Furthermore, according to the present disclosure, a control device is provided which includes a communication control unit that controls communication of a terminal device which receives provision of the logical network selected from among one or more logical networks for respectively providing providable communication services different from each other, in which the communication control unit selects a base station which can provide the logical network corresponding to the terminal device as a base station for transmitting a paging message in a case where the terminal device is in an idle mode.

Furthermore, according to the present disclosure, a method is provided which includes controlling communication with a communication system which can provide one or more logical networks for respectively providing communication services different from each other by a processor, acquiring information regarding the logical network which can be provided by the communication system, and selecting the communication system to be connected on the basis of the information regarding the logical network.

Furthermore, according to the present disclosure, a recording medium recording a program for making a computer function as a communication control unit that controls communication with a communication system which can provide one or more logical networks for respectively providing communication services different from each other, an acquisition unit that acquires information regarding the logical network which can be provided by the communication system, and a selection unit that selects the communication system to be connected on the basis of the information regarding the logical network.

Furthermore, according to the present disclosure, a method is provided which includes controlling communication with a terminal device which receives provision of the logical network selected from among one or more logical networks for respectively providing providable communication services different from each other by a processor and notifying the terminal device of information regarding the logical network which can be provided used by the terminal device to select a connection destination.

Furthermore, according to the present disclosure, a recording medium recording a program for making a computer function as a communication control unit that controls communication with a terminal device which receives provision of the logical network selected from among one or more logical networks for respectively providing providable communication services different from each other and a notification unit that notifies the terminal device of information regarding the logical network which can be provided used by the terminal device to select a connection destination.

Furthermore, according to the present disclosure, a method is provided which includes controlling communication of a terminal device which receives provision of the logical network selected from among one or more logical networks for respectively providing providable communication services different from each other by a processor and notifying the terminal device of information regarding the logical network which can be provided used by the terminal device to select a connection destination via a base station.

Furthermore, according to the present disclosure, a recording medium is provided which records a program for making a computer function as a communication control unit that controls communication of a terminal device which receives provision of the logical network selected from among one or more logical networks for respectively providing providable communication services different from each other and a notification unit that notifies the terminal device of information regarding the logical network which can be provided used by the terminal device to select a connection destination via a base station.

Furthermore, according to the present disclosure, a method is provided which includes controlling communication with a terminal device which receives provision of the logical network selected from among one or more logical networks for respectively providing providable communication services different from each other by a processor and transmitting a paging message to the terminal device by using the logical network corresponding to the terminal device in a case where the terminal device is in an idle mode.

Furthermore, according to the present disclosure, a recording medium is provided which records a program for making a computer function as a communication control unit that controls communication with a terminal device which receives provision of the logical network selected from among one or more logical networks for respectively providing providable communication services different from each other, in which the communication control unit transmits a paging message to the terminal device by using the logical network corresponding to the terminal device in a case where the terminal device is in an idle mode.

Furthermore, according to the present disclosure, a method is provided which includes controlling communication of a terminal device which receives provision of the logical network selected from among one or more logical networks for respectively providing providable communication services different from each other by a processor and selecting a base station which can provide the logical network corresponding to the terminal device as a base station for transmitting a paging message in a case where the terminal device is in an idle mode.

Furthermore, according to the present disclosure, a recording medium is provided which records a program for making a computer function as a communication control unit that controls communication of a terminal device which receives provision of the logical network selected from among one or more logical networks for respectively providing providable communication services different from each other, in which the communication control unit selects a base station which can provide the logical network corresponding to the terminal device as a base station for transmitting a paging message in a case where the terminal device is in an idle mode.

According to the present disclosure, the terminal device acquires information regarding a logical network which can be provided by a communication system which is a connection destination candidate and selects a communication system to be connected on the basis of the acquired information. Therefore, before connecting to the communication system, the terminal device can acquire the information regarding the logical network which can be provided by the communication system which is a connection destination candidate. With this operation, the terminal device can efficiently select the communication system to be connected.

### EFFECTS OF THE INVENTION

As described above, according to the present disclosure, a mechanism capable of efficiently operating a plurality of forms of communication coping with various use cases is provided. Note that the above effects are not necessarily limited, and any effect that has been described herein or other effect found from the specification may be obtained together with or instead of the above effects.

### BRIEF DESCRIPTION OF DRAWINGS

Fig. 1 is a diagram for explaining an overall configuration of a system according to an embodiment of the present disclosure.
Fig. 2 is a diagram illustrating an outline of a network configuration of LTE.
Fig. 3 is a diagram illustrating an outline of a network configuration of NR.
Fig. 4 is a diagram for explaining an outline of slicing technology.
Fig. 5 is a block diagram illustrating an example of a configuration of a base station according to the embodiment of the present disclosure.
Fig. 6 is a block diagram illustrating an example of a configuration of a terminal device according to the embodiment of the present disclosure.
Fig. 7 is a block diagram illustrating an example of a configuration of a control device according to the embodiment of the present disclosure.
Fig. 8 is a diagram for explaining an example of provision of slices by a system according to the present embodiment.
Fig. 9 is a sequence diagram illustrating an exemplary flow of connection processing executed in the system according to the present embodiment.
Fig. 10 is a sequence diagram illustrating an exemplary flow of the connection processing executed in the system according to the present embodiment.
Fig. 11 is a sequence diagram illustrating an exemplary flow of incoming call processing executed in the system according to the present embodiment.
Fig. 12 is a sequence diagram illustrating an exemplary flow of the incoming call processing executed in the system according to the present embodiment.
Fig. 13 is a block diagram illustrating an example of a schematic configuration of a server.
Fig. 14 is a block diagram illustrating a first example of a schematic configuration of an eNB.
Fig. 15 is a block diagram illustrating a second example of the schematic configuration of the eNB.
Fig. 16 is a block diagram illustrating an example of a schematic configuration of a smartphone.
Fig. 17 is a block diagram illustrating an example of a schematic configuration of a car navigation device.

### MODE FOR CARRYING OUT THE INVENTION

Hereinafter, preferred embodiments of the present disclosure will be described in detail with reference to the accompanying drawings. Note that, in the present specification and the drawings, components having substantially the same functional configuration are denoted with the same reference numeral so as to omit redundant description.

Furthermore, in the present specification and the drawings, there is a case where components having substantially the same functional configuration are distinguished from each other by applying different alphabets after the same reference numeral. For example, a plurality of components having substantially the same functional configuration is distinguished as base stations 100A, 100B, and 100C as necessary. However, in a case where it is not particularly necessary to distinguish the plurality of components having substantially the same functional configuration from each other, only the same reference numeral is applied. For example, in a case where it is not necessary for particularly distinguish the base stations 100A, 100B, and 100C from each other, the base stations 100A, 100B, and 100C are simply referred to as a base station 100.

Note that the description will be made in the following order.
1. Introduction
1.1. Overall configuration of system
1.2. Consideration
2. Exemplary configuration of each device
2.1. Configuration of base station
2.2. Configuration of terminal device
2.3. Configuration of control device
3. First embodiment
3.1. Technical problems
3.2. Technical features
4. Second embodiment
4.1. Technical problems
4.2. Technical features
5. Application example
6. Conclusion

### <<1. Introduction>>

### <1.1. Overall configuration of system>

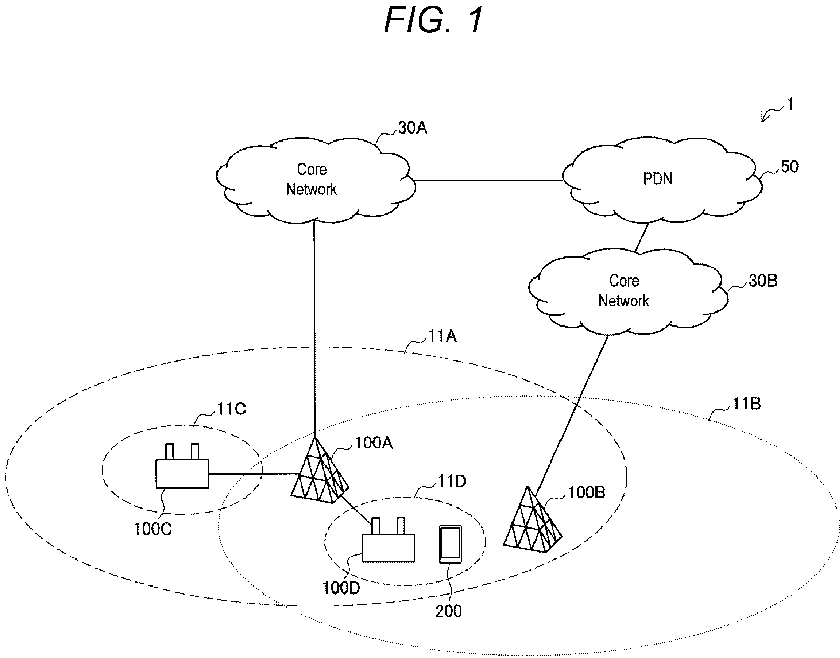

Fig. 1 is a diagram for explaining an overall configuration of a system according to an embodiment of the present disclosure. As illustrated in Fig. 1, a system 1 according to the present embodiment includes a plurality of base stations 100, a plurality of core networks (CN) 30, and a terminal device 200.

The base station 100 operates a cell and provides a wireless service to one or more terminal devices positioned in the cell. For example, the base station 100 provides the wireless service to the terminal device 200. The cell may be operated according to an arbitrary wireless communication method, for example, LTE, NR, and the like. In particular, the base stations 100A and 100B are macrocell base stations for respectively operating macrocells 11A and 11B. On the other hand, the base stations 100C and 100D are small cell base stations for respectively operating small cells 11C and 11D. The base station 100 is connected to the CN 30. Then, the CN 30 is connected to a Packet Data Network (PDN) 50 via a gateway device (not illustrated).

The terminal device 200 wirelessly communicates with the base station 100 under control by the base station 100. The terminal device 200 may be so-called user equipment (UE). The terminal device 200 forms a link (for example, downlink or uplink) with the base station 100. Then, the terminal device 200 transmits an uplink signal to the base station 100 and receives a downlink signal from the base station 100.

The terminal device 200 is located across the plurality of cells and has a plurality of connection destinations. For example, the terminal device 200 may select the base station 100A, 100B, or 100D as a connection destination. Furthermore, the terminal device 200 may select the CN 30A or 30B as a connection destination. Here, the CNs 30A and 30B may be respectively operated by different network operators. That is, the terminal device 200 may select a connection destination from the plurality of networks provided by the different network operators. For example, the terminal device 200 may select the CN 30A from the CNs 30A and 30B as a connection destination and select the base station 100D from the base stations 100A and 100D, which are connected and can communicate with the CN 30A, as a connection destination. In such an environment, it is desirable that the terminal device 200 can appropriately determine a network to be connected.

### <1.2. Consideration>

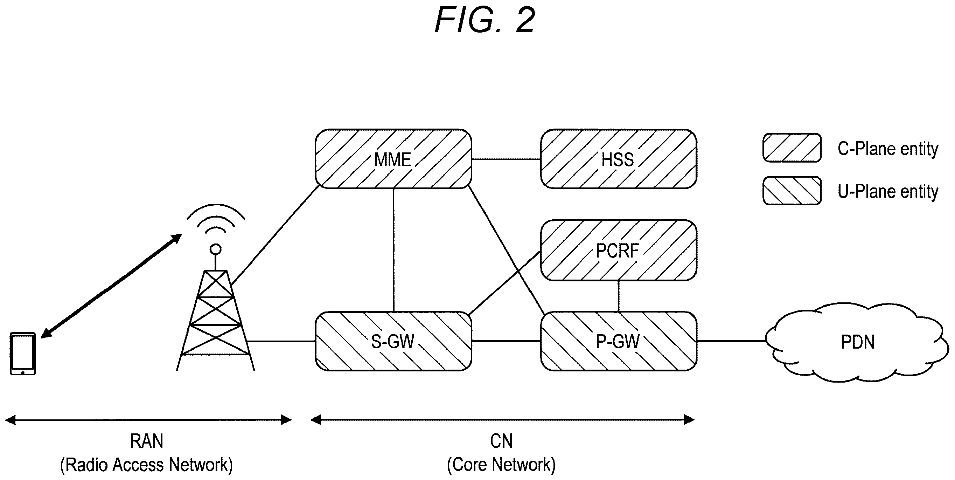

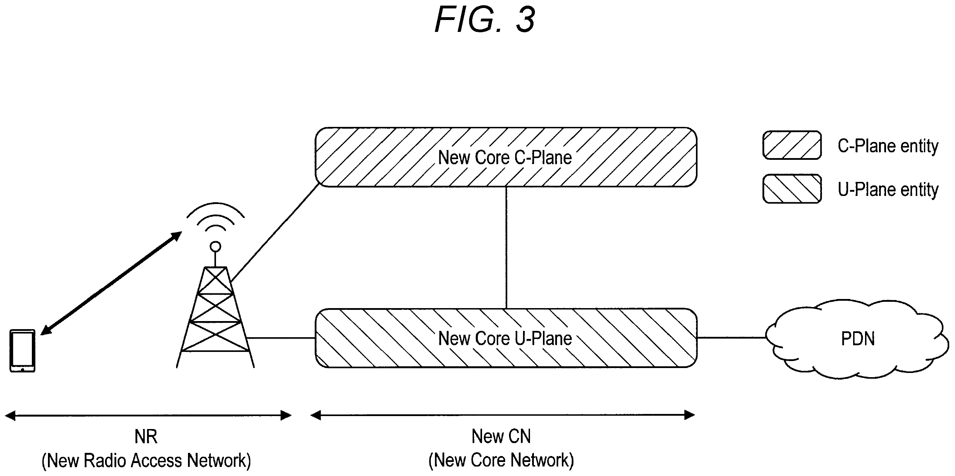

First, with reference to Figs. 2 and 3, the LTE and the NR which is a successor of the LTE examined in the 3GPP will be described.

Fig. 2 is a diagram illustrating an outline of a network configuration of the LTE. As illustrated in Fig. 2, the network configuration of the LTE is classified into a Radio Access Network (RAN) and the CN. The CN may include, for example, a Mobility Management Entity (MME), a Serving gateway (S-GW), a PDN gateway (P-GW), a Policy and Charging Rule Function (PCRF), and a Home Subscriber Server (HSS). Among these, the MME, the HSS, and the PCRF are control plane (C-Plane) entities, and the S-GW and the P-GW are user plane (U-Plane) entities. Each entity will be described in detail below. The MME is a control node that handles control plane signals and manages a movement state of the terminal device. The S-GW is a control node that handles user plane signals and is a gateway device that switches transfer paths of user data. The P-GW is a control node that handles user plane signals and is a gateway device to be a connection point between the core network 30 and the PDN 50. The PCRF is a control node that performs control regarding policies such as Quality of Service (QoS) relative to a bearer and charging. The HSS is a control node that handles subscriber data and performs service control.

Fig. 3 is a diagram illustrating an outline of a network configuration of the NR. As illustrated in Fig. 3, the network configuration of the NR is classified into the NR and a New CN. The New CN includes a New Core C-Plane that executes processing regarding the control plane and a New Core U-Plane that executes processing regarding the user plane.

The NR has two features. A first feature is to realize mobile broad band communication by using a frequency band from six GHz to 100 GHz. A second feature is to efficiently contain a plurality of forms of communication for various use cases. Here, the plurality of forms of communication includes Mobile Broad Band communication, Low Latency communication, Machine Type Communication (MTC), Device to Device (D2D), and the like. In the NR, it is considered to contain the plurality of forms of communication in a single network.

As technology for the core network connected to the RAN, Evolved Packet Core (EPC) has been adopted in the LTE. However, the New Core is considered as a successor. The New Core is required to efficiently contain the plurality of forms of communication and to suppress CAPEX/OPEX (equipment installation cost and operation cost) to be low.

To provide the plurality of forms of communication while maintaining the CAPEX/OPEX to be low, it is difficult to physically divide the network for each communication form. Therefore, it is considered that a plurality of logical networks corresponding to the plurality of communication forms is operated in a physically single network and a capacity of the logical network is flexibly changed in response to demand of a communication amount for each communication form.

To realize the above, it is considered that each node of the core network (in other words, communication equipment) is implemented as a virtual machine and an operation of the node according to the target communication form is virtually performed for each logical network. This is because functions implemented by the virtual machine can be increased or decreased according to the increase or decrease in the demand of the communication, and a computer resource allocated for each function can be increased or decreased. The functions implemented by the virtual machine are connected to other functions and networked according to virtual network technology. As such virtual network technology, for example, there is technology called Open Flow in which a central controller distributes rules of switches and the switch operates according to the rules distributed by the controller. According to Open Flow, by freely switching the switches connecting the functions implemented by the virtual machine, the network can be flexibly operated.

As described above, technology for providing logical networks having different properties (in other words, pipe for communication) by combining the virtual machine and the virtual network such as Open Flow is referred to as Slicing.

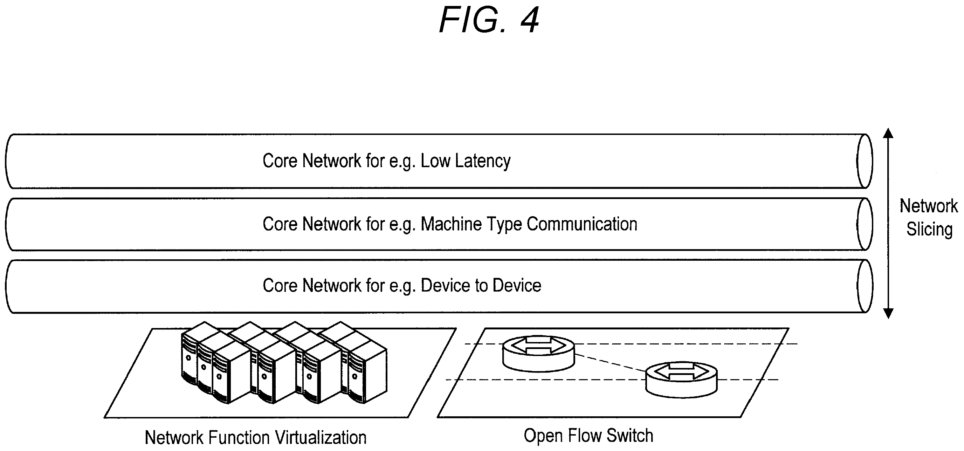

Fig. 4 is a diagram for explaining an outline of slicing technology. As illustrated in Fig. 4, by combining the virtual machine and the open flow switch, a core network for low latency, a core network for MTC, and a core network for D2D are realized on a single physical network. In other words, logically independent networks which can provide different communication services are realized on the single physical network. A logical network provided in the slicing technology is referred to as a slice or a network slice. According to the slicing technology, the logical networks for different applications can be flexibly provided. Moreover, according to the slicing technology, a capacity of each slice can be flexibly changed by increasing/decreasing a calculation resource allocated to the virtual machine and changing switching.

In consideration of the request to the New Core for efficiently containing the plurality of forms of communication while suppressing the CAPEX/OPEX to be low, it is desirable to adopt the slicing technology in a cellular network.

Here, the cellular network includes the RAN and the CN. It is considered that the slicing technology is easily and mainly applied to the CN side. This is because, in the LTE, while various nodes such as the MME, the P-GW, the S-GW, and the PCRF are provided on the side of the CN, only the base station is provided on the side of the RAN. However, to provide wireless services corresponding to various communication forms by using limited frequency bands by the single base station and to flexibly change a communication resource amount for each communication form, it is desirable to also apply the slicing technology to the RAN side.

Note that a concept which is seemingly similar to the slice includes the Quality of Service (QoS) that guarantees communication quality in the network. However, the QoS has only controlled a delay time and a communication band. Whereas, the slice not only can control the delay time and the communication band. For example, signaling such as an attach procedure may differ between different slices. Furthermore, a method for accessing the network may differ between the different slices. In other words, the slice can control the delay time and the communication band while providing unique signaling and access method. Therefore, the QoS can be recognized as a subset of the slice which can provide a part of the functions provided by the slice.

### <<2. Exemplary configuration of each device>>

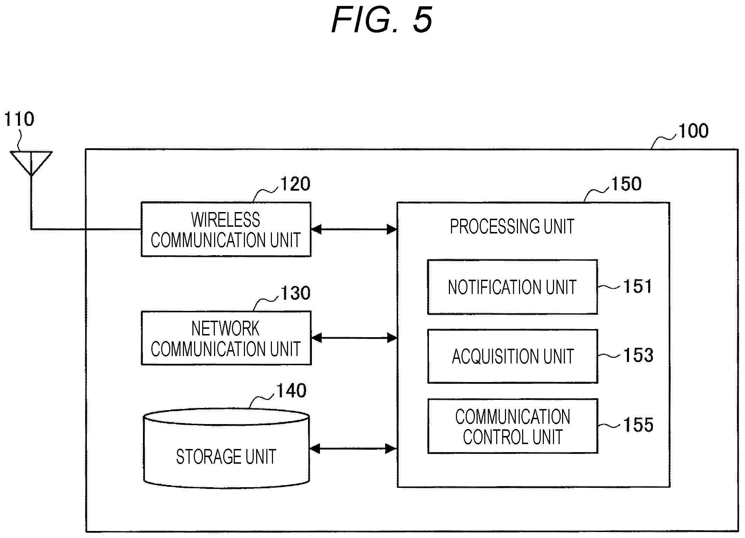

Subsequently, configurations of the base station 100, the terminal device 200, and a control device 300 according to the present embodiment will be described with reference to Figs. 5 to 7.

Here, the control device 300 is a control entity included in the CN 30. The CN 30 typically includes a plurality of control devices and performs various operations by operating the control devices in cooperation with each other. However, it is assumed that the control device 300 be an entity that executes processing according to the present embodiment in the CN 30. In other words, in the following description, the CN 30 may be read as the control device 300, and the control device 300 may be read as the CN 30. The functions of the control device 300 may be separately implemented in the plurality of control devices.

### <2.1. Configuration of base station>

First, an example of the configuration of the base station 100 according to the embodiment of the present disclosure will be described with reference to Fig. 5. Fig. 5 is a block diagram illustrating the example of the configuration of the base station 100 according to the embodiment of the present disclosure. With reference to Fig. 5, the base station 100 includes an antenna unit 110, a wireless communication unit 120, a network communication unit 130, a storage unit 140, and a processing unit 150.

### (1) Antenna unit 110

The antenna unit 110 radiates a signal output by the wireless communication unit 120 into space as a radio wave. Furthermore, the antenna unit 110 converts a radio wave in the space into a signal and outputs the signal to the wireless communication unit 120.

### (2) Wireless communication unit 120

The wireless communication unit 120 transmits and receives signals. For example, the wireless communication unit 120 transmits a downlink signal to the terminal device and receives an uplink signal from the terminal device.

### (3) Network communication unit 130

The network communication unit 130 transmits and receives information. For example, the network communication unit 130 transmits information to other nodes and receives information from the other nodes. For example, the other nodes include other base station 100 and the control device 300.

### (4) Storage unit 140

The storage unit 140 temporarily or permanently stores a program for operating the base station 100 and various data.

### (5) Processing unit 150

The processing unit 150 provides various functions of the base station 100. The processing unit 150 includes a notification unit 151, an acquisition unit 153, and a communication control unit 155. Note that the processing unit 150 may further include other components in addition to these components. In other words, the processing unit 150 may perform an operation other than operations of these components. The operations of the notification unit 151, the acquisition unit 153, and the communication control unit 155 will be described in detail later.

### <2.2. Configuration of terminal device>

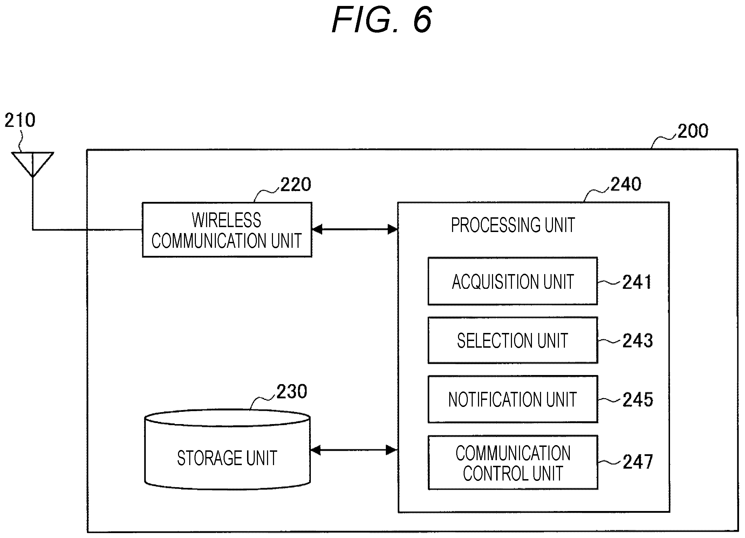

Subsequently, the example of the configuration of the terminal device 200 according to the embodiment of the present disclosure will be described with reference to Fig. 6. Fig. 6 is a block diagram illustrating the example of the configuration of the terminal device 200 according to the embodiment of the present disclosure. With reference to Fig. 6, the terminal device 200 includes an antenna unit 210, a wireless communication unit 220, a storage unit 230, and a processing unit 240.

### (1) Antenna unit 210

The antenna unit 210 radiates a signal output by the wireless communication unit 220 into space as a radio wave. Furthermore, the antenna unit 210 converts a radio wave in the space into a signal and outputs the signal to the wireless communication unit 220.

### (2) Wireless communication unit 220

The wireless communication unit 220 transmits and receives signals. For example, the wireless communication unit 220 receives the downlink signal from the base station and transmits the uplink signal to the base station.

### (3) Storage unit 230

The storage unit 230 temporarily or permanently stores a program for operating the terminal device 200 and various data.

### (4) Processing unit 240

The processing unit 240 provides various functions of the terminal device 200. The processing unit 240 includes an acquisition unit 241, a selection unit 243, a notification unit 245, and a communication control unit 247. Note that the processing unit 240 may further include other components in addition to these components. In other words, the processing unit 240 may perform an operation other than operations of these components. The operations of the acquisition unit 241, the selection unit 243, the notification unit 245, and the communication control unit 247 will be described in detail later.

### <2.3. Configuration of control device>

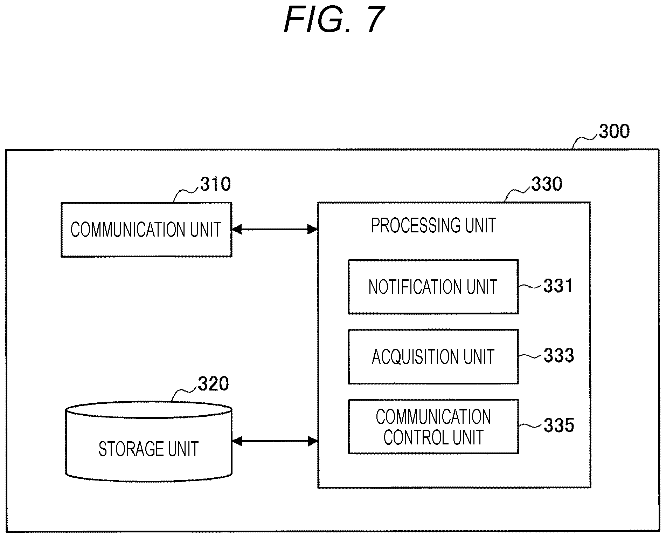

Subsequently, the example of the configuration of the control device 300 according to the embodiment of the present disclosure will be described with reference to Fig. 7. Fig. 7 is a block diagram illustrating the example of the configuration of the control device 300 according to the embodiment of the present disclosure. With reference to Fig. 7, the control device 300 includes a communication unit 310, a storage unit 320, and a processing unit 330.

### (1) Communication unit 310

The communication unit 310 transmits and receives signals. For example, the communication unit 310 communicates with the base station 100 connected to the CN 30.

### (2) Storage unit 320

The storage unit 320 temporarily or permanently stores a program for operating the control device 300 and various data.

### (3) Processing unit 330

The processing unit 330 provides various functions of the control device 300. The processing unit 330 includes a notification unit 331, an acquisition unit 333, and a communication control unit 335. Note that the processing unit 330 may further include other components in addition to these components. In other words, the processing unit 330 may perform an operation other than operations of these components. The operations of the notification unit 331, the acquisition unit 333, and the communication control unit 335 will be described in detail later.

### <<3. First embodiment>>

The present embodiment relates to communication starting from the terminal device 200.

### <3.1. Technical problems>

Each of the terminal device, the base station, and the CN can provide slices, and the slices may be arbitrarily associated with each other. Therefore, it is desirable that each of the terminal device, the base station, and the CN disclose information regarding the slices respectively provided by the terminal device, the base station, and the CN.

For example, the terminal device may have various options regarding a network to be connected. For example, the terminal device can select a connection destination from the base stations of the plurality of network operators. Furthermore, even in a case where the terminal device is connected to the base station of the single network operator, in an environment in which small cell base stations are densely arranged, the terminal device may be able to select a small cell base station to be connected. Furthermore, in an environment in which the macrocell and the small cell are overlaid, the terminal device may able to select whether to connect to the macrocell base station or the small cell base station.

In such an environment, the terminal device selects a base station to be connected from among various base stations. Then, various CNs may exist behind the base station. Then, it is desirable that the terminal device can select a network to be connected as recognizing what the slices are which are provided by the base station and the CN behind the base station.

### <3.2. Technical features>

### (1) Slice in the present embodiment

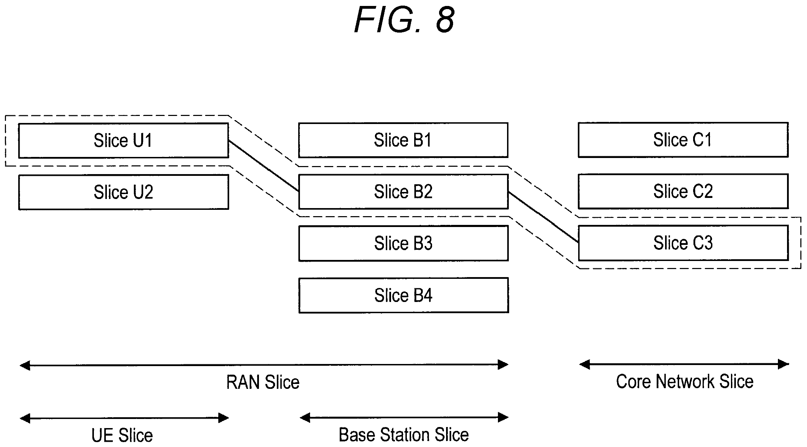

Each of the base station 100, the terminal device 200, and the CN 30 according to the present embodiment can provide one or more logical networks for respectively providing different communication services. In other words, each of the base station 100, the terminal device 200, and the CN 30 can provide one or more slices. This point will be described with reference to Fig. 8.

Fig. 8 is a diagram for explaining an example of provision of slices by the system according to the present embodiment. As illustrated in Fig. 8, for example, the terminal device 200 provides slices U1 and U2, the base station 100 provides slices B1 to B4, and the CN 30 provides slices C1 to C3. The slicing technology is usually applied to the CN, and it is considered that the CN provides the slices. On the other hand, in the present embodiment, as illustrated in Fig. 8, the slices are provided by the RAN side. In addition, the base station 100 and the terminal device 200 provide the slices.

The slices provided by the base station 100, the terminal device 200, and the CN 30 are associated with each other so as to form an end-to-end slice from the terminal device 200 to the CN 30. In the example illustrated in Fig. 8, the slices U1, B2, and C3 are associated with each other so as to form an end-to-end slice. Note that a subject that associates the slices with each other is arbitrary. For example, the base station 100 or the control device 300 may associate the slices with each other in response to a request from the terminal device 200.

Therefore, each of the base station 100, the terminal device 200, and the CN 30 provides the information regarding the slices which can be respectively provided by the base station 100, the terminal device 200, and the CN 30 to each other. For example, the CN 30 provides the information regarding the slice which can be provided by the CN 30 to the base station 100 and the terminal device 200. Furthermore, the base station 100 provides the information regarding the slice which can be provided by the base station 100 to the terminal device 200. Note that the information regarding the slice which can be provided by each device may be simply referred to as information regarding the slice below.

The technology regarding the slice is provided so that the terminal device 200 can request an attach and is connected to a desired slice after recognizing what kind of slice is provided from a network side, a state of the slice (for example, degree of congestion), and the like. Note that the information regarding the slice may be recognized as capability information indicating a capability regarding the slice.

Hereinafter, an example of the information regarding the slice will be described.

For example, the information regarding the slice may include information indicating a kind of a logical network which can be provided or a kind of a logical network which cannot be provided. The device to which this information is notified (for example, terminal device 200) can recognize whether or not a physical network which is a connection candidate can provide a logical network desired by the device before the connection is made. An example of this information is indicated in Table 1 below.

### [Table 1]

**TABLE 1**

| EXAMPLE OF INFORMATION INDICATING KIND OF SLICE WHICH CAN BE PROVIDED BY CN/BASE STATION | |
|---|---|
| INDEX | CONTENT |
| 1 | CAN PROVIDE SLICE COMPLIANT WITH LTE |
| 2 | CAN PROVIDE SLICE COMPLIANT WITH NR MTC |
| 3 | CAN PROVIDE SLICE COMPLIANT WITH NR Low Latency |
| 4 | CAN PROVIDE SLICE COMPLIANT WITH NR D2D |

For example, the information regarding the slice may include information indicating a load state of the slice. The device to which this information is notified (for example, terminal device 200) can select a physical network to be connected on the basis of the load state of the slice. An example of this information is indicated in Table 2 below.

### [Table 2]

**TABLE 2**

| EXAMPLE OF INFORMATION INDICATING LOAD STATE OF SLICE OF CN/BASE STATION | |
|---|---|
| INDEX | CONTENT |
| 1 | LOAD STATE OF SLICE COMPLIANT WITH LTE |
| 2 | LOAD STATE OF SLICE COMPLIANT WITH NR MTC |
| 3 | LOAD STATE OF SLICE COMPLIANT WITH NR Low Latency |
| 4 | LOAD STATE OF SLICE COMPLIANT WITH NR D2D |

For example, the information regarding the slice may include information indicating a usage rate of the slice. The device to which this information is notified (for example, terminal device 200) can select a physical network to be connected on the basis of the usage rate of the slice. An example of this information is indicated in Table 3 below.

### [Table 3]

**TABLE 3**

| EXAMPLE OF INFORMATION INDICATING USAGE RATE OF SLICE OF CN/BASE STATION | |
|---|---|
| INDEX | CONTENT |
| 1 | USAGE RATE WHEN SLICE COMPLIANT WITH LTE IS USED |
| 2 | USAGE RATE WHEN SLICE COMPLIANT WITH NR MTC IS USED |
| 3 | USAGE RATE WHEN SLICE COMPLIANT WITH NR Low Latency IS USED |
| 4 | USAGE RATE WHEN SLICE COMPLIANT WITH NR D2D IS USED |

For example, the information regarding the slice may include information indicating a probability that the slice is provided. The device to which this information is notified (for example, terminal device 200) can select, for example, a physical network which has a high possibility that a slice desired by the device is provided as a connection destination.

For example, the information regarding the slice may include information regarding a configuration of the slice. This information is particularly notified from the CN 30 to the base station 100 and used in the base station 100. An example of this information is indicated in Table 4 below.

### [Table 4]

**TABLE 4**

| EXAMPLE OF INFORMATION INDICATING CAPABILITY REGARDING CONFIGURATION OF SLICE OF CN | |
|---|---|
| INDEX | CONTENT |
| 1 | HOW MUCH CAPACITY OF SLICE CAN BE INCREASED |
| 2 | TIME REQUIRED FOR CHANGING CAPACITY OF SLICE (IN OTHER WORDS, CAPABILITY FOR MAKING DYNAMIC CHANGE) |

### (2) Operation of terminal device 200

The terminal device 200 (for example, communication control unit 247) controls communication with a communication system which can provide one or more slices. Here, the communication system indicates the base station 100 and the CN 30. For example, the terminal device 200 transmits an uplink signal and receives a downlink signal according to a schedule from the base station 100. In particular, in the present embodiment, first, the terminal device 200 (for example, acquisition unit 241) acquires the information regarding the slice which can be provided by the communication system. More specifically, the terminal device 200 acquires the information regarding the slice which can be provided by the communication system before the attach to the communication system. Next, the terminal device 200 (for example, selection unit 243) selects a communication system to be connected on the basis of the acquired information regarding the slice. The terminal device 200 may select the base station 100 to be the connection destination and may select the CN 30 to be the connection destination in addition to the base station 100 to be the connection destination in a case where there is the plurality of CNs 30 which can be connected to the base station 100. Then, the terminal device 200 (for example, communication control unit 247) starts an attach procedure to the selected communication system, establishes connection to the selected communication system, and communicates with the communication system. In particular, the terminal device 200 is connected to a desired slice from among the slices provided by the selected communication system and performs communication.

The terminal device 200 (for example, acquisition unit 241) may transmit a request for the information regarding the slice to the communication system (specifically, base station 100). With this operation, the terminal device 200 can actively acquire the information regarding the slice.

The terminal device 200 (for example, notification unit 245) may notify other device (for example, base station 100) of the information regarding the slice of the terminal device 200. Typically, only in a case where an MTC protocol is implemented, the single terminal device 200 can perform MTC communication. The same applies to other communication forms such as low latency communication. Therefore, the terminal device 200 may notify information indicating whether processing corresponding to what communication form can be executed, that is, a slice corresponding to which communication form can be provided as the information regarding the slice.

The terminal device 200 may notify the information regarding the slice of the terminal device 200 together with the attach request. With this notification, the terminal device 200 can be connected to an appropriate slice according to the capability of the terminal device 200.

### (3) Operation of base station 100

The base station 100 (for example, communication control unit 155) can provide one or more slices and controls communication with the terminal device 200 to which a slice selected from among available slices is provided. For example, the base station 100 performs scheduling and communicates with the terminal device 200. In particular, in the present embodiment, the base station 100 (for example, notification unit 151) notifies other device (for example, terminal device 200) of the information regarding the slice which can be provided by the base station 100 and is used to select a connection destination in the terminal device 200. With this operation, the terminal device 200 can select the communication system to be the connection destination on the basis of the information regarding the slice which can be provided by the base station 100.

The base station 100 may notify, for example, an amount of the resource for low latency communication which can be provided and a delay amount in that case, as the information regarding the slice. Furthermore, the base station 100 may notify, for example, the number of terminals which can be contained in a case of a communication form in which a large number of terminals are simultaneously connected to the network such as the MTC as the information regarding the slice.

Note that the base station 100 can simultaneously operate a plurality of component carriers by using carrier aggregation technology. Which frequency and time slot of the plurality of component carriers is used for MTC, used for mobile broad band communication, or used for low latency communication largely depends on resource scheduling by the base station 100. Therefore, in terms of resource allocation, it can be said that the slice is seemingly similar to the scheduling. However, for example, since it is difficult to set parameters such as the number of terminals to be contained in the MTC, the scheduling is not like the slice.

The base station 100 may notify the information regarding the slice by using system information. In other words, the base station 100 may periodically inform the information regarding the slice. Note that, as the system information, for example, a Master Information Block (MIB) or a System Information Block (SIB) may be used.

The base station 100 may notify the information regarding the slice in response to a request from the terminal device 200. With this operation, the terminal device 200 can receive the notification of the information regarding the slice when necessary. In this case, the base station 100 may notify the terminal device 200 which is a transmission source of the request of the information regarding the slice by dedicated signaling.

The base station 100 (for example, acquisition unit 153) may acquire the information regarding the slice which can be provided by the CN 30 from the CN 30. Then, the base station 100 may notify the terminal device 200 of the information regarding the slice which can be provided by the CN 30 connected to the base station 100. For example, the base station 100 periodically acquires the information regarding the slice from the CN 30 and notifies the terminal device 200 of the acquired information. With this operation, the terminal device 200 can select a communication system to be connected on the basis of the information regarding the slice which can be provided by the CN 30 connected to the base station 100 in addition to the information regarding the slice which can be provided by the base station 100.

Here, the slice provided by the base station 100 and the slice provided by the CN 30 are not necessarily combined (in other words, associated). For example, there may be a limitation such that a certain slice of the base station 100 and a certain slice of the CN 30 cannot be used in combination. Therefore, the base station 100 may notify the terminal device 200 of the information indicating whether or not the slice which can be provided by the base station 100 and the slice which can be provided by the CN 30 can be combined. For example, information indicating a pair of the slices which can be combined is notified. With this operation, the terminal device 200 can select the connection destination in consideration of the above limitation. Examples of the information to be notified are indicated in Tables 5 and 6 below. According to Tables 5 and 6, the information indicating possible combinations of the slice of the base station 100 and the slice of the CN 30 is notified to the terminal device 200.

### [Table 5]

**TABLE 5**

| EXAMPLE OF SLICE COMBINATION INFORMATION | | |
|---|---|---|
| AVAILABLE COMBINATION | SLICE OF BASE STATION | SLICE OF CN |
| 1 | LTE in 2GHz band | LTE |
| 2 | LTE in 2GHz band | New Core |
| 3 | NR in 10GHz band | EPC |
| 4 | NR in 10GHz band | New Core |

### [Table 6]

**TABLE 6**

| EXAMPLE OF SLICE COMBINATION INFORMATION | | |
|---|---|---|
| AVAILABLE COMBINATION | SLICE OF BASE STATION | SLICE OF CN |
| 1 | NR MTC | EPC |
| 2 | NR MTC | New Core MTC |
| 3 | LTE MTC | EPC |
| 4 | LTE MTC | New Core MTC |

In a case where there is the plurality of combinations, a probability indicating a provision probability of each of the plurality of combinations may be notified. An example is indicated in Table 7 below. According to Table 7, a possible combination of the slice of the base station 100 and the slice of the CN 30 and a provision probability of each combination are notified to the terminal device 200.

### [Table 7]

**TABLE 7**

| EXAMPLE OF SLICE COMBINATION INFORMATION | | | |
|---|---|---|---|
| AVAILABLE COMBINATION | SLICE OF BASE STATION | SLICE OF CN | PROVISION PROBABILITY |
| 1 | LTE in 2GHz band | EPC | 0.7 |
| 2 | LTE in 2GHz band | New Core | 0.2 |
| 3 | NR in 10GHz band | EPC | 0.5 |
| 4 | NR in 10GHz band | New Core | 0.5 |

### (4) Operation of CN 30

The CN 30 can provide one or more slices. As an example of the slice of the CN 30, a slice for low latency and a slice for MTC are considered. The slice for low latency is a network in which the number of switches to be passed through is small and computer resources are sufficiently allocated so as to reduce processing delay. On the other hand, the slice for MTC is a network in which more computer resources are allocated to the processing of the control plane than the processing of the user plane. With this structure, the slice for MTC is suitable for a communication form in which the number of terminals to be contained is large and a data amount to be transmitted at one time is small.

The control device 300 (for example, communication control unit 335) controls communication of the terminal device 200 to which a slice selected from among one more slices which can be provided by the CN 30 is provided. For example, the control device 300 associates the slices with each other in response to a request from the terminal device 200 and relays exchange of signals between the terminal device 200 and the PDN. In particular, in the present embodiment, the control device 300 (for example, notification unit 331) notifies the other device of the information regarding the slice which can be provided by the CN 30 and is used to select the connection destination in the terminal device 200. The control device 300 may notify the base station 100 of the information regarding the slice and may notify the terminal device 200 via the base station 100. With this operation, the terminal device 200 can select the connection destination on the basis of the information regarding the slice which can be provided by the CN 30.

The control device 300 may notify, for example, the number of switches, the amount of the computer resources, or the like as the information regarding the slice. Furthermore, the control device 300 may notify of the information indicating whether or not the slice corresponding to the EPC can be provided and whether or not the slice corresponding to the NR can be provided as the information regarding the slice.

### (5) Flow of processing

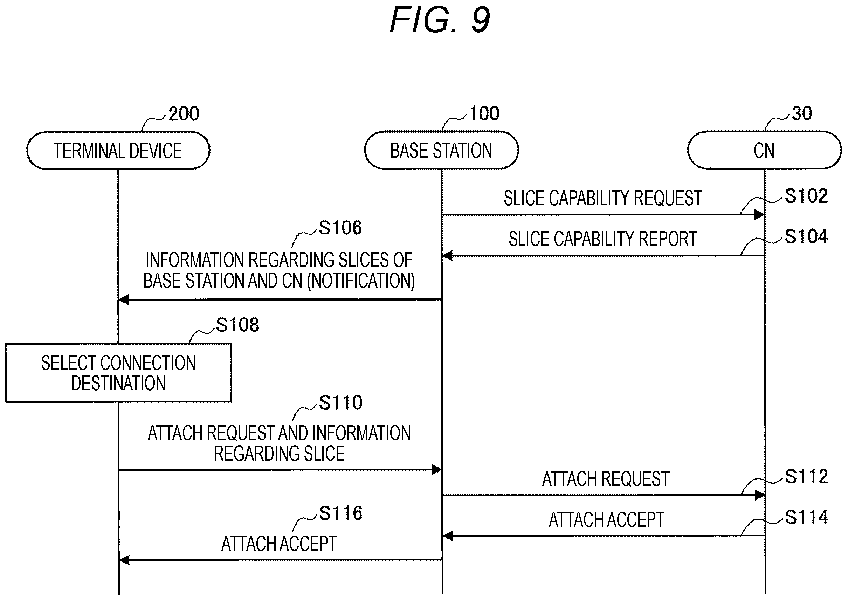

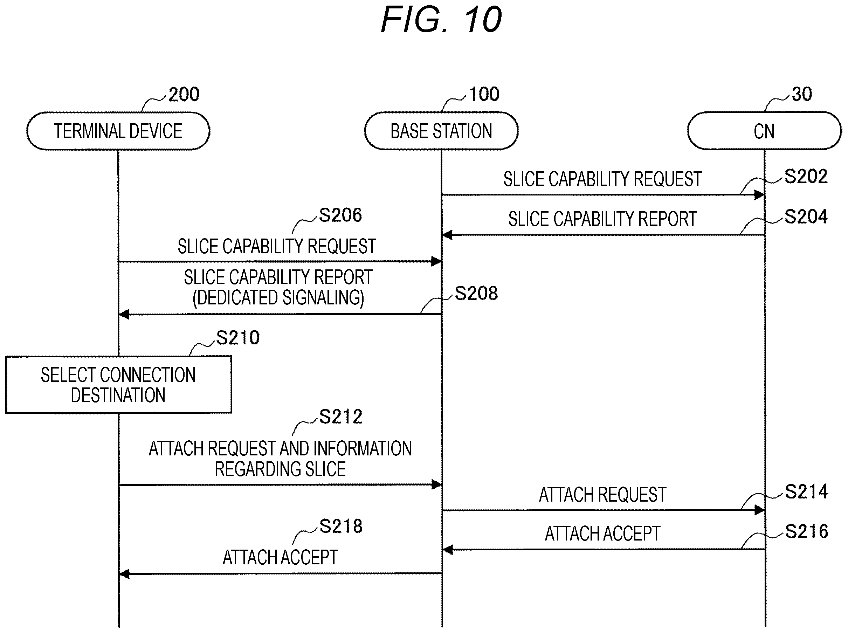

Hereinafter, an example of connection processing by the terminal device 200 will be described. First, with reference to Fig. 9, an example of connection processing in a case where the information regarding the slice is informed will be described. Subsequently, with reference to Fig. 10, an example of connection processing in a case where the information regarding the slice is notified by using the dedicated signaling will be described.

### • Notification

Fig. 9 is a sequence diagram illustrating an exemplary flow of connection processing executed in the system 1 according to the present embodiment. As illustrated in Fig. 9, the terminal device 200, the base station 100, and the CN 30 (more correctly, control device 300) are involved in this sequence.

The base station 100 periodically transmits a slice capability request, which requests notification of the information regarding the slice, to the CN 30 (step S102). Next, the CN 30 transmits a slice capability report including the information regarding the slice of the CN 30 to the base station 100 (step S104).

The base station 100 periodically informs the terminal device 200 of the information regarding the slice of the base station 100 and the CN 30 (step S106). Then, the terminal device 200 selects the communication system to be the connection destination (base station 100 or base station 100 and CN 30) on the basis of the received information regarding the slice of the base station 100 and the CN 30 (step S108).

Thereafter, an attach procedure to the selected communication system is performed. Specifically, the terminal device 200 transmits an attach request and the information regarding the slice of the terminal device 200 to the base station 100 (step S110). Next, the base station 100 transmits the attach request to the CN 30 (step S112). When receiving an attach accept from the CN 30 (step S114), the base station 100 transmits the attach accept to the terminal device 200 (step S116).

### • Dedicated signaling

Fig. 10 is a sequence diagram illustrating an exemplary flow of the connection processing executed in the system 1 according to the present embodiment. As illustrated in Fig. 10, the terminal device 200, the base station 100, and the CN 30 (more correctly, control device 300) are involved in this sequence.

The base station 100 periodically transmits a slice capability request, which requests notification of the information regarding the slice, to the CN 30 (step S202). Next, the CN 30 transmits a slice capability report including the information regarding the slice of the CN 30 to the base station 100 (step S204).

When a connection request to the network is generated, the terminal device 200 transmits the slice capability request to the base station 100 (step S206). Next, the base station 100 transmits the slice capability report including the information regarding the slice of the base station 100 and the CN 30 to the terminal device 200 by using the dedicated signaling (step S208). Then, the terminal device 200 selects the communication system to be the connection destination (base station 100 or base station 100 and CN 30) on the basis of the received information regarding the slice of the base station 100 and the CN 30 (step S210).

Thereafter, an attach procedure to the selected communication system is performed. Specifically, the terminal device 200 transmits an attach request and the information regarding the slice of the terminal device 200 to the base station 100 (step S212). Next, the base station 100 transmits the attach request to the CN 30 (step S214). When receiving an attach accept from the CN 30 (step S216), the base station 100 transmits the attach accept to the terminal device 200 (step S218).

### (6) Differences from the related art

Differences between the technology according to the present embodiment described above and the technology described in Non-Patent Document 1 will be described.

In Non-Patent Document 1, technology is described in which, when the UE requests an attach to a common slice, a network side (for example, base station and core network) checks whether or not the UE has the right to connect to the network, and thereafter, the network side selects a slice to be provided to the UE. A problem of this technology is that it is necessary for the UE to request the attach to the network without knowing what kind of slice is provided from the network side.

Whereas, in the present embodiment, before the terminal device 200 requests the attach, the network side provides the information regarding the slice in advance. Therefore, in the present embodiment, the terminal device 200 can request an attach and be connected to a desired slice after recognizing what kind of slice is provided from the network side, the state of the slice (for example, degree of congestion), and the like. Therefore, in the present embodiment, an unnecessary procedure for connecting to the common slice once is reduced, and the waste is avoided such that connection to the other network is made since the connected network does not provide the desired slice.

### <<4. Second embodiment>>

The present embodiment relates to communication starting from a CN 30.

### <4.1. Technical problems>

A terminal device may transition to an idle mode (for example, Radio Resource Control (RRC) idle state) after connecting to a network. Then, in a case where an incoming call to the terminal device in the idle mode is made, a paging message is transmitted from a base station to the terminal device. Here, the incoming call means that an incoming call is made to the terminal device, data addressed to the terminal device is received, or the like. It is desirable that the paging message be transmitted by using the slice desired by the terminal device.

### <4.2. Technical features>

### (1) Slice for paging message

In a case where a terminal device 200 is in the idle mode, a control device 300 (for example, communication control unit 335) selects a base station 100 which can provide a slice corresponding to the terminal device 200 as a base station which is made to transmit the paging message. For example, the control device 300 selects the base station 100 which can provide the slice corresponding to the terminal device 200 from a range that is predicted to include the terminal device 200 (for example, tracking area). Then, after setting a slice to be used for the selected base station 100, the control device 300 makes the terminal device 200 transmit the paging message.

In a case where the terminal device 200 is in the idle mode (for example, RRC idle state), the base station 100 (for example, communication control unit 155) transmits the paging message to the terminal device 200 by using the slice corresponding to the terminal device 200. Specifically, the base station 100 transmits the paging message by using the slice set by the control device 300 described above. With this operation, it is possible to use the slice corresponding to the terminal device 200 for transmission of the paging message to the terminal device 200. Note that a tracking area may include the plurality of base stations 100. Furthermore, the number of base stations 100 which are selected and transmit the paging message may be plural.

The base station 100 (for example, notification unit 151) notifies the CN 30 of information regarding the slice which can be provided by the base station 100. Then, the control device 300 (for example, acquisition unit 333) acquires the information regarding the slice which can be provided by the base station 100. With this operation, the control device 300 can grasp the slice which can be provided by each base station 100 connected to the CN 30 in advance. The control device 300 stores the notified information, refers to the stored information in a case where an incoming call is received, and selects the base station 100 which is made to transmit the paging message. Note that paging setting may be different for each slice. For example, the paging message may be transmitted only at the end of a month regarding MTC communication, and the paging message may be transmitted to the terminal device 200 via a relay device regarding D2D communication. Such setting may be notified from the base station 100 to the CN 30.

The slice which is used to transmit the paging message and corresponds to the terminal device 200 may be selected by various methods.

For example, the slice which is used to transmit the paging message and corresponds to the terminal device 200 may be registered in advance. For example, the control device 300 registers (in other words, store) the slice corresponding to the terminal device 200. With this operation, when the terminal device 200 receives an incoming call, the control device 300 can make the base station 100 transmit the paging message by using the registered slice. For example, the slice corresponding to the terminal device 200 may be registered in a subscriber file in advance. In the subscriber file, a slice to be used for transmission of the paging message for each terminal device 200 may be registered. An example of the subscriber file is indicated in Table 8.

### [Table 8]

**TABLE 8**

| EXAMPLE OF SUBSCRIBER FILE | |
|---|---|
| IDENTIFICATION INFORMATION | SLICE TO BE USED TO TRANSMIT PAGING MESSAGE |
| UE1 | SLICE FOR MTC |
| UE2 | SLICE FOR LOW LATENCY COMMUNICATION |
| UE3 | SLICE FOR MOBILE BROAD BAND |

For example, the slice which is used to transmit the paging message and corresponds to the terminal device 200 may be set by the terminal device 200 when the terminal device 200 transitions to the RRC idle state. For example, when the terminal device 200 transitions to the RRC idle state, the terminal device 200 transmits a slice setting request, for specifying the slice to be used to transmit the paging message, to the CN 30. With this operation, the CN 30 can register the slice corresponding to the terminal device 200. For example, the terminal device 200 transmits a slice setting request including an indication such that the terminal device 200 waits for the paging message as an MTC terminal. Then, in a case where the terminal device 200 receives an incoming call, the base station 100 which can provide the slice of the MTC is selected from among the base stations 100 in the vicinity of the terminal device 200, and the base station 100 transmits the paging message by using the slice of the MTC. With this operation, the terminal device 200 which operates as the MTC terminal can receive the paging message for the MTC terminal. Note that the slice setting request may include information regarding the slice of the terminal device 200.

For example, the slice which is used to transmit the paging message and corresponds to the terminal device 200 may be a slice which has connected before the terminal device 200 transitions to the RRC idle state. For example, the CN 30 stores the slice connected to the terminal device 200 in a RRC connection state and refers to the stored information in a case where an incoming call is received after the transition to the RRC idle state. In this case, the terminal device 200 can receive the paging message with the desired slice without explicitly transmitting the slice setting request.

The example of the method for selecting the slice which is used to transmit the paging message and corresponds to the terminal device 200 has been described above. Two or more of these methods may be used in combination, and the paging message may be transmitted by using the slice selected by each method.

Here, a case is assumed where a communication partner which makes a call to the terminal device 200 specifies the slice to be used to transmit the paging message. For example, the slice to be used to transmit the paging message may be specified in response to a request of an application of the communication partner and the like. Note that the number of specified slices may be plural.

In that case, the slice which is used to transmit the paging message and corresponds to the terminal device 200 may be a slice specified by a calling source. In other words, the paging message may be transmitted by using the slice specified by the calling source. Furthermore, in a case where the slice used to transmit the paging message is specified by the calling source regarding the incoming call to the terminal device 200, the control device 300 (for example, communication control unit 335) may determine whether or not the incoming calling can be received. For example, the control device 300 determines that the incoming call can be received in a case where the terminal device 200 and the base station 100 in the vicinity of the terminal device 200 can provide the slice specified by the calling source and determines that the incoming call cannot be received in a case where the slice cannot be provided. In addition, the control device 300 may determine that the incoming call can be received in a case where the slice specified according to the slice setting request by the terminal device 200 coincides with the slice specified by the calling source and may determine that the incoming call cannot be received in a case where the slices do not coincide with each other. In a case where it is determined that the incoming call can be received, the control device 300 transmits the paging message to the terminal device 200 via the base station 100 by using the specified slice. On the other hand, in a case where it is determined that the incoming call cannot be received, the control device 300 transmits that the incoming call cannot be received to the calling source.

### (2) Flow of processing

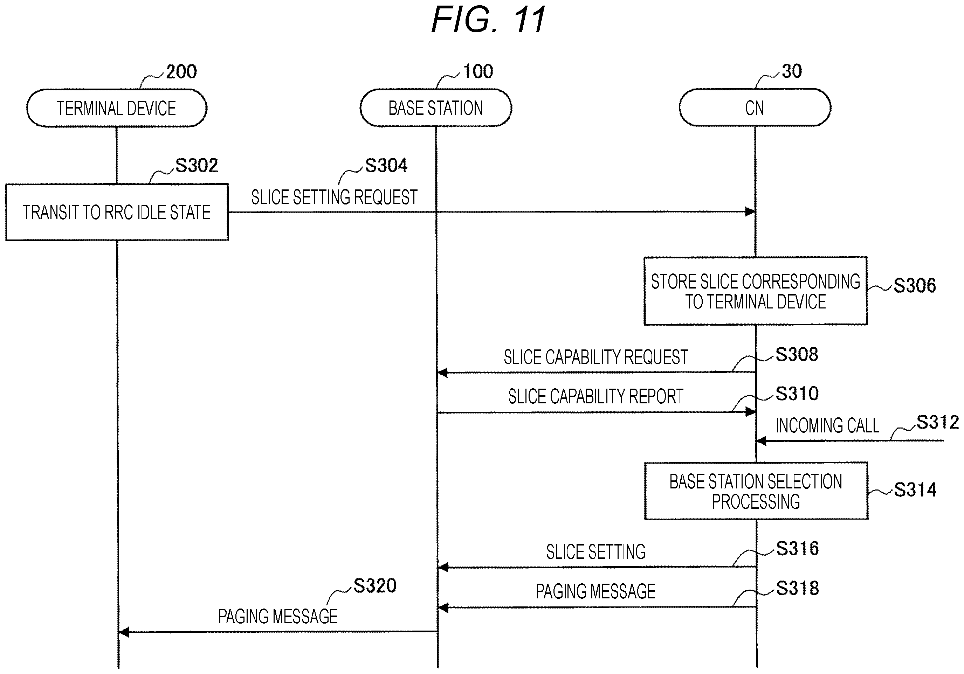

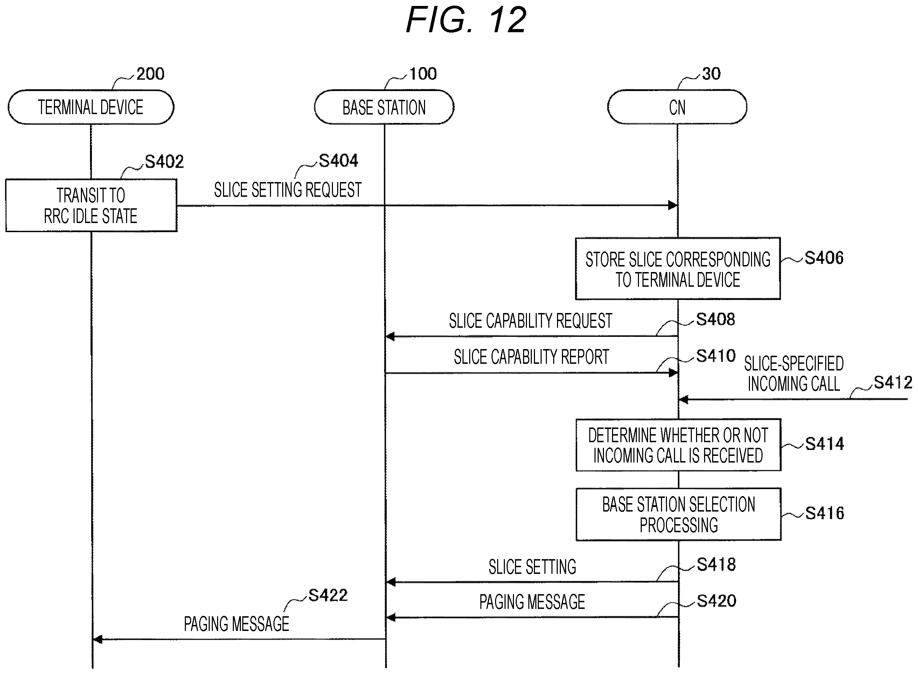

Hereinafter, an example of processing in a case where an incoming call to the terminal device 200 is made will be described. First, with reference to Fig. 11, an example of incoming call processing in a case where the terminal device 200 transmits the slice setting request will be described. Subsequently, with reference to Fig. 12, an example of incoming call processing in a case where the slice is specified by the calling source will be described.

Fig. 11 is a sequence diagram illustrating an exemplary flow of incoming call processing executed in the system 1 according to the present embodiment. As illustrated in Fig. 11, the terminal device 200, the base station 100, and the CN 30 (more correctly, control device 300) are involved in this sequence.

First, when transitioning to the RRC idle state (step S302), the terminal device 200 transmits a slice setting request to the CN 30 (step S304).

Next, the CN 30 stores a slice corresponding to the terminal device 200 on the basis of the slice setting request (step S306). For example, the control device 300 may be a control plane entity of the CN 30, and the control device 300 stores the slice corresponding to the terminal device 200 on the basis of the slice setting request. Furthermore, the CN 30 transmits a slice capability request to the base station 100 (step S308) and receives a slice capability response from the base station 100 (step S310) so as to store the information regarding the slice of the base station 100.

When receiving an incoming call to the terminal device 200 (step S312), the CN 30 executes base station selection processing (step S314). Specifically, the CN 30 refers to the information stored in steps S306 and S310 and selects the base station 100 which can provide the slice corresponding to the terminal device 200 from a range that is predicted to include the terminal device 200.

Then, the CN 30 performs slice setting to as to use the slice corresponding to the terminal device 200 to the base station 100 (step S316) and transmits the paging message (step S318). Next, the base station 100 transmits the paging message to the terminal device 200 by using the set slice (step S320).

Fig. 12 is a sequence diagram illustrating an exemplary flow of the incoming call processing executed in the system 1 according to the present embodiment. As illustrated in Fig. 11, the terminal device 200, the base station 100, and the CN 30 (more correctly, control device 300) are involved in this sequence.

First, when transitioning to the RRC idle state (step S402), the terminal device 200 transmits the slice setting request to the CN 30 (step S404).

Next, the CN 30 stores a slice corresponding to the terminal device 200 on the basis of the slice setting request (step S406). For example, the control device 300 may be a control plane entity of the CN 30, and the control device 300 stores the slice corresponding to the terminal device 200 on the basis of the slice setting request. Furthermore, the CN 30 transmits the slice capability request to the base station 100 (step S408) and receives the slice capability response from the base station 100 (step S410) so as to store the information regarding the slice of the base station 100.

When receiving a slice-specified incoming call to the terminal device 200 (step S412), the CN 30 determines whether or not the incoming call can be received (step S414). For example, in a case where the terminal device 200 and the base station 100 in the vicinity of the terminal device 200 can provide the slice specified by the calling source and the slice specified by the terminal device 200 and the slice specified by the calling source coincide with each other, the control device 300 determines that the incoming call can be received. In a case where it is determined that the incoming call can be received, the CN 30 executes the base station selection processing (step S416). Specifically, the CN 30 refers to the information stored in steps S406 and S410 and selects the base station 100 which can provide the slice specified by the calling source from the range that is predicted to include the terminal device 200.

Then, the CN 30 performs slice setting on the base station 100 so as to use the slice specified by the calling source (step S418) and transmits the paging message (step S420). Next, the base station 100 transmits the paging message to the terminal device 200 by using the set slice (step S422).

### (3) Differences from the related art

Differences between the technology according to the present embodiment described above and the technology described in Non-Patent Document 1 will be described.

In Non-Patent Document 1, it is considered that the paging message is transmitted by using a common slice. Whereas, in the present embodiment, the paging message is transmitted by using the slice specified by the terminal device 200 or specified by the calling source. Therefore, in the present embodiment, a special slice such as a common slice is unnecessary. Furthermore, in a case where the terminal device 200 operates as, for example, an MTC terminal, the terminal device 200 can receive the paging message by an operation similar to that in a case where the terminal device 200 is connected to an MTC-dedicated physical network.

### <<5. Application example>>

The technology according to the present disclosure can be applied to various products. For example, the control device 300 may be realized as any kind of server such as a tower server, a rack server, or a blade server. Furthermore, the control device 300 may be a control module mounted on the server (for example, integrated circuit module configured by single die or card or blade to be inserted into slot of blade server).

Furthermore, for example, the base station 100 may be realized as any kind of evolved Node B (eNB) such as a macro eNB or a small eNB. The small eNB may be an eNB which covers a cell smaller than a macrocell, such as a pico eNB, a micro eNB, or a home (femto) eNB. Instead of the eNB, the base station 100 may be realized as other kind of base station such as a NodeB or a Base Transceiver Station (BTS). The base station 100 may include a main body (referred to as base station device) which controls wireless communication and one or more Remote Radio Heads (RRH) arranged at a position different from the main body. Furthermore, various kinds of terminals to be described later may operate as the base station 100 by temporarily or semipermanently executing a base station function.

Furthermore, for example, the terminal device 200 may be realized as a mobile terminal such as a smartphone, a tablet Personal Computer (PC), a notebook PC, a portable game terminal, a portable/dongle mobile router, or a digital camera or an on-vehicle terminal such as a car navigation device. Furthermore, the terminal device 200 may be realized as a terminal for performing Machine To Machine (M2M) communication (referred to as Machine Type Communication (MTC) terminal). Moreover, the terminal device 200 may be a wireless communication module mounted on these terminals (for example, integrated circuit module configured by single die).

### <5.1. Application example regarding control device>

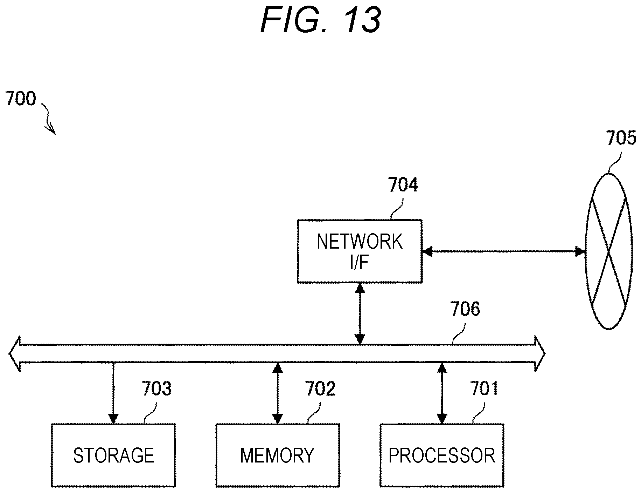

Fig. 13 is a block diagram illustrating an example of a schematic configuration of a server 700 to which the technology according to the present disclosure may be applied. The server 700 includes a processor 701, a memory 702, a storage 703, a network interface 704, and a bus 706.

The processor 701 may be, for example, a Central Processing Unit (CPU) or a Digital Signal Processor (DSP) and controls various functions of the server 700. The memory 702 includes a Random Access Memory (RAM) and a Read Only Memory (ROM) and stores a program to be executed by the processor 701 and data. The storage 703 may include a storage medium such as a semiconductor memory or a hard disk.

The network interface 704 is a wired communication interface for connecting the server 700 to a wired communication network 705. The wired communication network 705 may be a core network such as an Evolved Packet Core (EPC) or may be a Packet Data Network (PDN) such as the Internet.

The bus 706 connects the processor 701, the memory 702, the storage 703, and the network interface 704 to each other. The bus 706 may include two or more buses with different speeds (for example, high-speed bus and low-speed bus).

In the server 700 illustrated in Fig. 13, one or more components included in the processing unit 330 described with reference to Fig. 7 (notification unit 331, acquisition unit 333, and/or communication control unit 335) may be implemented in the processor 701. As an example, it is possible that a program for making the processor function as the one or more components (in other words, program for making processor execute operations of one or more components) is installed to the server 700 and the processor 701 executes the program. As another example, it is possible that the server 700 includes a module including the processor 701 and the memory 702 and the one or more components are implemented in the module. In this case, the module stores the program which makes the processor function as the one or more components in the memory 702, and the processor 701 may execute the program. As described above, the server 700 or the module may be provided as the device including the one or more components, and the program for making the processor function as the one or more components may be provided. Furthermore, a readable recording medium which has recorded the program may be provided.

Furthermore, in the server 700 illustrated in Fig. 13, for example, the communication unit 310 described with reference to Fig. 7 may be implemented in the network interface 704. Furthermore, the storage unit 320 may be implemented in the memory 702 and/or the storage 703.

### <5.2. Application example regarding base station>

### (First application example)

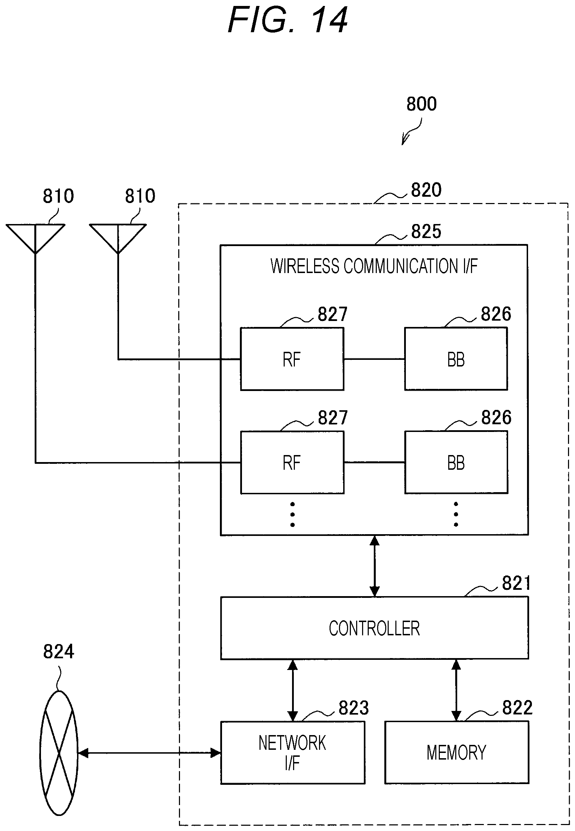

Fig. 14 is a block diagram illustrating a first example of a schematic configuration of an eNB to which the technology according to the present disclosure may be applied. An eNB 800 includes one or more antennae 810 and a base station device 820. Each antenna 810 and the base station device 820 may be connected to each other via an RF cable.

Each antenna 810 includes a single or a plurality of antenna elements (for example, a plurality of antenna elements forming MIMO antenna) and is used for exchange of wireless signals by the base station device 820. As illustrated in Fig. 14, the eNB 800 includes the plurality of antennae 810, and the plurality of antennae 810 may respectively corresponds to a plurality of frequency bands used by the eNB 800, for example. Note that an example is illustrated in Fig. 14 in which the eNB 800 includes the plurality of antennae 810. However, the eNB 800 may include the single antenna 810.

The base station device 820 includes a controller 821, a memory 822, a network interface 823, and a wireless communication interface 825.

The controller 821 may be, for example, a CPU or a DSP and operates various functions of an upper layer of the base station device 820. For example, the controller 821 generates a data packet from data in a signal processed by the wireless communication interface 825 and transfers the generated packet via the network interface 823. The controller 821 may generate a bundled packet by bundling data from a plurality of baseband processors and transfer the generated bundled packet. Furthermore, the controller 821 may have a logical function for performing control such as Radio Resource Control, Radio Bearer Control, Mobility Management, Admission Control, or Scheduling. Furthermore, the control may be performed in cooperation with surrounding eNBs or a core network node. The memory 822 includes a RAM and a ROM and stores a program to be executed by the controller 821 and various control data (for example, terminal list, transmission power data, scheduling data, and the like).

The network interface 823 is a communication interface for connecting the base station device 820 to a core network 824. The controller 821 may communicate with a core network node or other eNB via the network interface 823. In this case, the eNB 800 may be connected to the core network node or the other eNB by a logical interface (for example, S1 interface or X2 interface). The network interface 823 may be a wired communication interface or a wireless communication interface for a wireless backhaul. In a case where the network interface 823 is a wireless communication interface, the network interface 823 may use a frequency band higher than a frequency band used by the wireless communication interface 825 for wireless communication.

The wireless communication interface 825 supports any one of cellular communication methods such as Long Term Evolution (LTE) or LTE-Advanced and provides wireless connection to a terminal positioned in the cell of the eNB 800 via the antenna 810. The wireless communication interface 825 may typically include a baseband (BB) processor 826, an RF circuit 827, and the like. The BB processor 826 may perform, for example, encoding/decoding, modulation/demodulation, multiplexing/demultiplexing, and the like and executes various signal processing of each layer (for example, L1, Medium Access Control (MAC), Radio Link Control (RLC), and Packet Data Convergence Protocol (PDCP)). The BB processor 826 may include a part or all of the logical functions described above instead of the controller 821. The BB processor 826 may be a module including a memory for storing a communication control program, a processor for executing the program, and a related circuit, and the function of the BB processor 826 may be changed according to update of the program. Furthermore, the module may be a card or a blade to be inserted into a slot of the base station device 820 or a chip mounted on the card or the blade. On the other hand, the RF circuit 827 may include a mixer, a filter, an amplifier, and the like and transmits and receives a wireless signal via the antenna 810.

The wireless communication interface 825 includes the plurality of BB processors 826 as illustrated in Fig. 14, and the plurality of BB processors 826 may respectively correspond to the plurality of frequency bands used by the eNB 800, for example. Furthermore, the wireless communication interface 825 includes the plurality of RF circuits 827 as illustrated in Fig. 14, and the plurality of RF circuits 827 may respectively correspond to, for example, a plurality of antenna elements. Note that, in Fig. 14, an example is illustrated in which the wireless communication interface 825 includes the plurality of BB processors 826 and the plurality of RF circuits 827. However, the wireless communication interface 825 may include a single BB processor 826 or a single RF circuit 827.

In the eNB 800 illustrated in Fig. 14, the one or more components included in the processing unit 150 described with reference to Fig. 5 (notification unit 151, acquisition unit 153, and/or communication control unit 153) may be implemented in the wireless communication interface 825. Alternatively, at least a part of these components may be implemented in the controller 821. As an example, it is possible that the eNB 800 mounts a module including a part or all of the wireless communication interface 825 (for example, BB processor 826) and/or the controller 821 and the one or more components are implemented in the module. In this case, the module may store a program for making the processor function as the one or more components (in other words, program making processor execute operations of one or more components) and execute the program. As another example, it is possible that the program for making the processor function as the one or more components is installed in the eNB 800 and the wireless communication interface 825 (for example, BB processor 826) and/or the controller 821 executes the program. As described above, the eNB 800, the base station device 820, or the module may be provided as the device including the one or more components, and the program for making the processor function as the one or more components may be provided. Furthermore, a readable recording medium which has recorded the program may be provided.

Furthermore, in the eNB 800 illustrated in Fig. 14, the wireless communication unit 120 described with reference to Fig. 5 may be implemented in the wireless communication interface 825 (for example, RF circuit 827). Furthermore, the antenna unit 110 may be implemented in the antenna 810. Furthermore, the network communication unit 130 may be implemented in the controller 821 and/or the network interface 823. Furthermore, the storage unit 140 may be implemented in the memory 822.

### (Second application example)

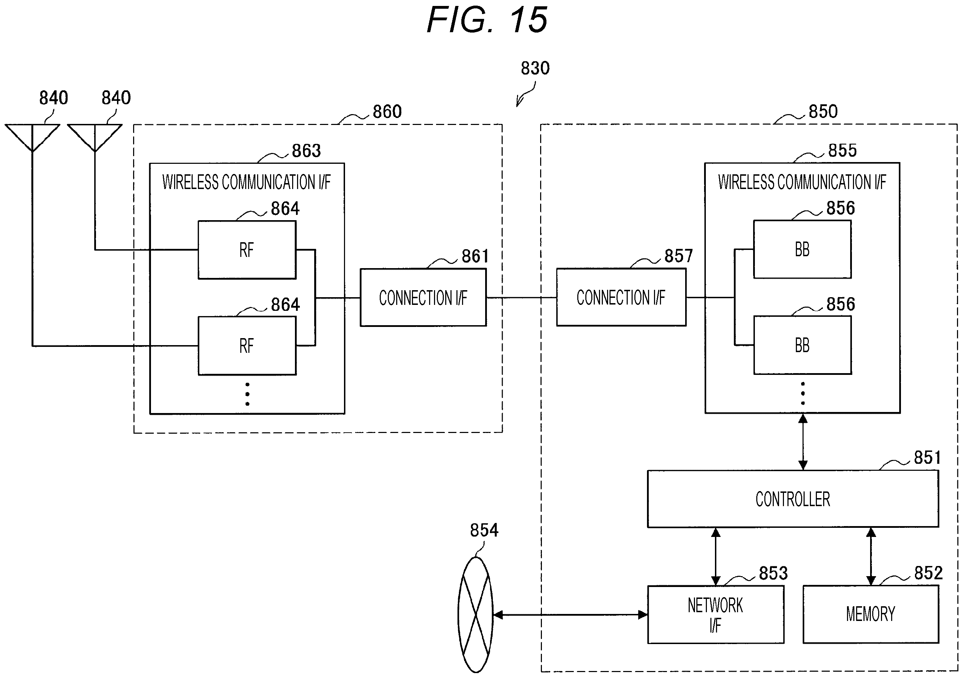

Fig. 15 is a block diagram illustrating a second example of a schematic configuration of an eNB to which the technology according to the present disclosure may be applied. An eNB 830 includes one or more antennae 840, a base station device 850, and an RRH 860. Each antenna 840 and the RRH 860 may be connected to each other via an RF cable. Furthermore, the base station device 850 and the RRH 860 may be connected to each other by a high-speed line such as an optical fiber cable.

Each antenna 840 includes a single or a plurality of antenna elements (for example, a plurality of antenna elements forming MIMO antenna) and is used for exchange of wireless signals by the RRH 860. As illustrated in Fig. 15, the eNB 830 includes the plurality of antennae 840, and the plurality of antennae 840 may respectively correspond to a plurality of frequency bands used by the eNB 830, for example. Note that an example is illustrated in Fig. 15 in which the eNB 830 includes the plurality of antennae 840. However, the eNB 830 may include the single antenna 840.

The base station device 850 includes a controller 851, a memory 852, a network interface 853, a wireless communication interface 855, and a connection interface 857. The controller 851, the memory 852, and the network interface 853 are respectively similar to the controller 821, the memory 822, and the network interface 823 described with reference to Fig. 14.

The wireless communication interface 855 supports any one of cellular communication methods such as the LTE or the LTE-Advanced and provides wireless communication to a terminal positioned in a sector corresponding to the RRH 860 via the RRH 860 and the antenna 840. The wireless communication interface 855 may typically include a BB processor 856 and the like. The BB processor 856 is similar to the BB processor 826 described with reference to Fig. 14 except that the BB processor 856 is connected to an RF circuit 864 of the RRH 860 via the connection interface 857. The wireless communication interface 855 includes the plurality of BB processors 856 as illustrated in Fig. 15, and the plurality of BB processors 856 may respectively correspond to the plurality of frequency bands used by the eNB 830, for example. Note that an example is illustrated in Fig. 15 in which the wireless communication interface 855 includes the plurality of BB processors 856. However, the wireless communication interface 855 may include a single BB processor 856.

The connection interface 857 is an interface for connecting the base station device 850 (wireless communication interface 855) to the RRH 860. The connection interface 857 may be a communication module for communication through the high-speed line which connects the base station device 850 (wireless communication interface 855) to the RRH 860.

Furthermore, the RRH 860 includes a connection interface 861 and a wireless communication interface 863.

The connection interface 861 is an interface for connecting the RRH 860 (wireless communication interface 863) to the base station device 850. The connection interface 861 may be a communication module for communication through the high-speed line.

The wireless communication interface 863 transmits and receives wireless signals via the antenna 840. The wireless communication interface 863 may typically include the RF circuit 864 and the like. The RF circuit 864 may include a mixer, a filter, an amplifier, and the like and transmits and receives wireless signals via the antenna 840. The wireless communication interface 863 includes the plurality of RF circuits 864 as illustrated in Fig. 15, and the plurality of RF circuits 864 may respectively correspond to, for example, a plurality of antenna elements. Note that an example is illustrated in Fig. 15 in which the wireless communication interface 863 includes the plurality of RF circuits 864. However, the wireless communication interface 863 may include a single RF circuit 864.

In the eNB 830 illustrated in Fig. 15, the one or more components included in the processing unit 150 described with reference to Fig. 5 (notification unit 151, acquisition unit 153, and/or communication control unit 153) may be implemented in the wireless communication interface 855 and/or the wireless communication interface 863. Alternatively, at least a part of these components may be implemented in the controller 851. As an example, it is possible that the eNB 830 mounts a module including a part or all of the wireless communication interface 855 (for example, BB processor 856) and/or the controller 851 and the one or more components are implemented in the module. In this case, the module may store a program for making the processor function as the one or more components (in other words, program making processor execute operations of one or more components) and execute the program. As another example, it is possible that the program for making the processor function as the one or more components is installed in the eNB 830 and the wireless communication interface 855 (for example, BB processor 856) and/or the controller 851 executes the program. As described above, the eNB 830, the base station device 850, or the module may be provided as the device including the one or more components, and the program for making the processor function as the one or more components may be provided. Furthermore, a readable recording medium which has recorded the program may be provided.

Furthermore, in the eNB 830 illustrated in Fig. 15, for example, the wireless communication unit 120 described with reference to Fig. 5 may be implemented in the wireless communication interface 863 (for example, RF circuit 864). Furthermore, the antenna unit 110 may be implemented in the antenna 840. Furthermore, the network communication unit 130 may be implemented in the controller 851 and/or the network interface 853. Furthermore, the storage unit 140 may be implemented in the memory 852.

### <5.3. Application example regarding terminal device>

### (First application example)

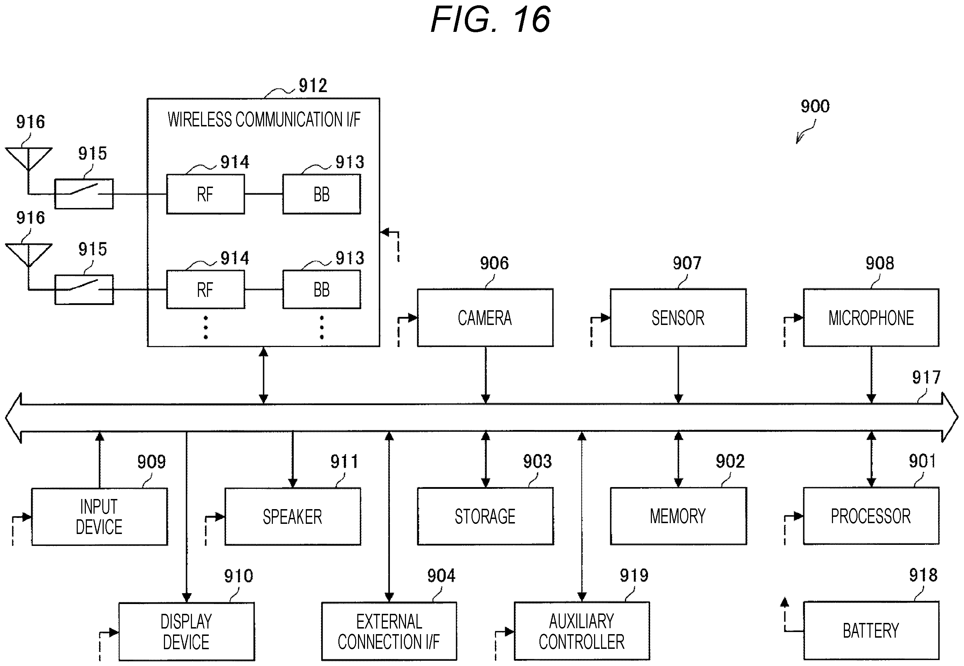

Fig. 16 is a block diagram illustrating an example of a schematic configuration of a smartphone 900 to which the technology according to the present disclosure may be applied. The smartphone 900 includes a processor 901, a memory 902, a storage 903, an external connection interface 904, a camera 906, a sensor 907, a microphone 908, an input device 909, a display device 910, a speaker 911, a wireless communication interface 912, one or more antenna switches 915, one or more antennae 916, a bus 917, a battery 918, and an auxiliary controller 919.

The processor 901 may be, for example, a CPU or a System on Chip (SoC) and controls functions of an application layer and other layers of the smartphone 900. The memory 902 includes a RAM and a ROM and stores a program to be executed by the processor 901 and data. The storage 903 may include a storage medium such as a semiconductor memory or a hard disk. The external connection interface 904 is an interface for connecting an external device such as a memory card or a Universal Serial Bus (USB) device to the smartphone 900.

For example, the camera 906 has an imaging element such as a Charge Coupled Device (CCD), and a Complementary Metal Oxide Semiconductor (CMOS), and generates a captured image. The sensor 907 may include, for example, a sensor group such as a positioning sensor, a gyro sensor, a geomagnetic sensor, and an acceleration sensor. The microphone 908 converts voice input to the smartphone 900 into a voice signal. The input device 909 includes, for example, a touch sensor which detects a touch on a screen of the display device 910, a keypad, a keyboard, a button, a switch, or the like and accepts an operation or an information input from a user. The display device 910 includes a screen such as a liquid crystal display (LCD) or an organic light emitting diode (OLED) and displays an output image of the smartphone 900. The speaker 911 converts the voice signal output from the smartphone 900 into voice.

The wireless communication interface 912 supports any one of cellular communication methods such as the LTE or the LTE-Advanced, and performs wireless communication. The wireless communication interface 912 may typically include a BB processor 913, an RF circuit 914, and the like. The BB processor 913 may perform, for example, encoding/decoding, modulation/demodulation, multiplexing/demultiplexing, and the like and executes various signal processing for wireless communication. On the other hand, the RF circuit 914 may include a mixer, a filter, an amplifier, and the like and transmits and receives a wireless signal via the antenna 916. The wireless communication interface 912 may be a one-chip module on which the BB processor 913 and the RF circuit 914 are integrated. The wireless communication interface 912 may include a plurality of BB processors 913 or a plurality of RF circuits 914 as illustrated in Fig. 16. Note that, in Fig. 16, an example is illustrated in which the wireless communication interface 912 includes the plurality of BB processors 913 and the plurality of RF circuits 914. However, the wireless communication interface 912 may include a single BB processor 913 or a single RF circuit 914.

Moreover, the wireless communication interface 912 may support other kind of wireless communication method such as a short-distance wireless communication method, a proximity wireless communication method, or a wireless Local Area Network (LAN) method, in addition to the cellular communication method. In this case, the wireless communication interface 912 may include the BB processor 913 and the RF circuit 914 for each wireless communication method.

Each antenna switch 915 switches a connection destination of the antenna 916 from among a plurality of circuits included in the wireless communication interface 912 (for example, circuits for different wireless communication methods).

Each antenna 916 includes a single or a plurality of antenna elements (for example, a plurality of antenna elements forming MIMO antenna) and is used for exchange of wireless signals by the wireless communication interface 912. The smartphone 900 may include a plurality of antennae 916 as illustrated in Fig. 16. Note that, in Fig. 16, an example is illustrated in which the smartphone 900 includes the plurality of antennae 916. However, the smartphone 900 may include a single antenna 916.

Moreover, the smartphone 900 may include the antenna 916 for each wireless communication method. In this case, the antenna switch 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919 to each other. The battery 918 supplies power to each block of the smartphone 900 illustrated in Fig. 16 via a feed line which is partially illustrated by a broken line in Fig. 16. The auxiliary controller 919 performs minimum functions of the smartphone 900, for example, in a sleep mode.

In the smartphone 900 illustrated in Fig. 16, the one or more components included in the processing unit 240 described with reference to Fig. 6 (acquisition unit 241, selection unit 243, notification unit 245, and/or communication control unit 247) may be implemented in the wireless communication interface 912. Alternatively, at least a part of these components may be implemented in the processor 901 or the auxiliary controller 919. As an example, it is possible that the smartphone 900 mounts a module including a part or all of the wireless communication interface 912 (for example, BB processor 913), the processor 901, and/or the auxiliary controller 919 and the one or more components are implemented in the module. In this case, the module may store a program for making the processor function as the one or more components (in other words, program making processor execute operations of one or more components) and execute the program. As another example, it is possible that a program for making the processor function as the one or more components is installed in the smartphone 900 and the wireless communication interface 912 (for example, BB processor 913), the processor 901, and/or the auxiliary controller 919 execute the program. As described above, the smartphone 900 or the module may be provided as the device including the one or more components, and the program for making the processor function as the one or more components may be provided. Furthermore, a readable recording medium which has recorded the program may be provided.

Furthermore, in the smartphone 900 illustrated in Fig. 16, for example, the wireless communication unit 220 described with reference to Fig. 6 may be implemented in the wireless communication interface 912 (for example, RF circuit 914). Furthermore, the antenna unit 210 may be implemented in the antenna 916. Furthermore, the storage unit 230 may be implemented in the memory 902.

### (Second application example)

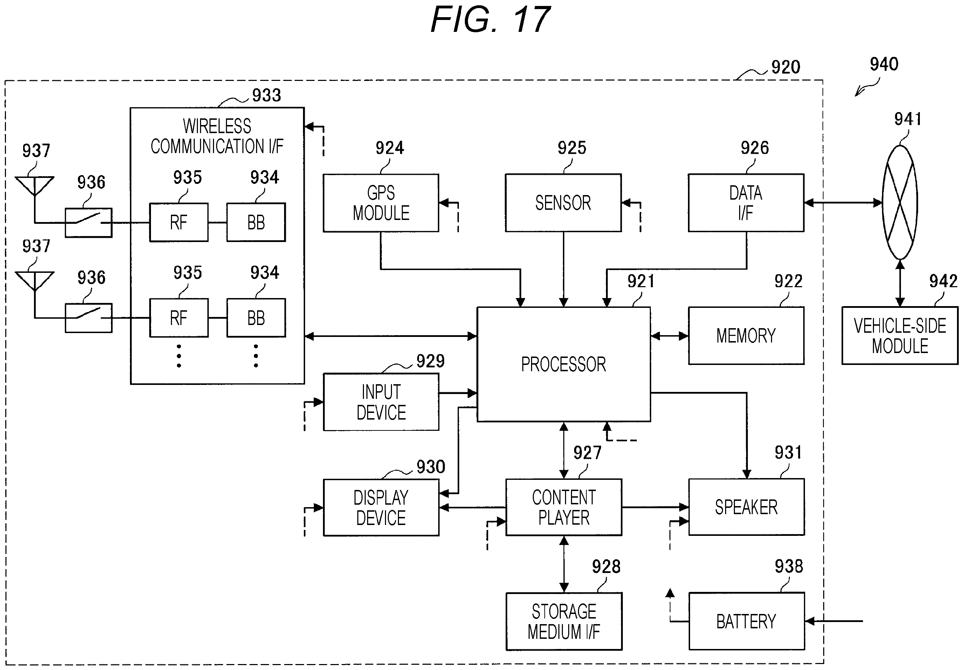

Fig. 17 is a block diagram illustrating an example of a schematic configuration of a car navigation device 920 to which the technology according to the present disclosure may be applied. The car navigation device 920 includes a processor 921, a memory 922, a Global Positioning System (GPS) module 924, a sensor 925, a data interface 926, a content player 927, a storage medium interface 928, an input device 929, a display device 930, a speaker 931, a wireless communication interface 933, one or more antenna switches 936, one or more antennae 937, and a battery 938.

The processor 921 may be, for example, a CPU or a SoC and controls a navigation function and other functions of the car navigation device 920. The memory 922 includes a RAM and a ROM and stores a program to be executed by the processor 921 and data.

The GPS module 924 measures a position (for example, latitude longitude, and altitude) of the car navigation device 920 by using a GPS signal received from a GPS satellite. The sensor 925 may include, for example, a sensor group such as a gyro sensor, a geomagnetic sensor, and an air pressure sensor. The data interface 926 is connected to, for example, an on-vehicle network 941 via a terminal (not illustrated) and acquires data generated on a side of a vehicle such as vehicle speed data.

The content player 927 reproduces contents stored in a storage medium (for example, CD or DVD) to be inserted into the storage medium interface 928. The input device 929 includes, for example, a touch sensor which detects a touch on a screen of the display device 930, a button, a switch, or the like and accepts an operation or an information input from a user. The display device 930 has a screen such as a LCD or an OLED and displays an image of a navigation function or reproduced content. The speaker 931 outputs voice of the navigation function or the reproduced content.

The wireless communication interface 933 supports any one of cellular communication methods such as the LTE or the LTE-Advanced, and performs wireless communication. The wireless communication interface 933 may typically include a BB processor 934, an RF circuit 935, and the like. The BB processor 934 may perform, for example, encoding/decoding, modulation/demodulation, multiplexing/demultiplexing, and the like and executes various signal processing for wireless communication. On the other hand, the RF circuit 935 may include a mixer, a filter, an amplifier, and the like and transmits and receives a wireless signal via the antenna 937. The wireless communication interface 933 may be a one-chip module on which the BB processor 934 and the RF circuit 935 are integrated. The wireless communication interface 933 may include a plurality of BB processors 934 or a plurality of RF circuits 935 as illustrated in Fig. 17. Note that, in Fig. 17, an example is illustrated in which the wireless communication interface 933 includes the plurality of BB processors 934 and the plurality of RF circuits 935. However, the wireless communication interface 933 may include a single BB processor 934 or a single RF circuit 935.

Moreover, the wireless communication interface 933 may support other kind of wireless communication method such as a short-distance wireless communication method, a proximity wireless communication method, or a wireless LAN method, in addition to the cellular communication method. In this case, the wireless communication interface 933 may include the BB processor 934 and the RF circuit 935 for each wireless communication method.

Each antenna switch 936 switches a connection destination of the antenna 937 from among a plurality of circuits included in the wireless communication interface 933 (for example, circuits for different wireless communication methods).

Each antenna 937 includes a single or a plurality of antenna elements (for example, a plurality of antenna elements forming MIMO antenna) and is used for exchange of wireless signals by the wireless communication interface 933. The car navigation device 920 may include the plurality of antennae 937 as illustrated in Fig. 17. Note that, in Fig. 17, an example is illustrated in which the car navigation device 920 includes the plurality of antennae 937. However, the car navigation device 920 may include a single antenna 937.

Moreover, the car navigation device 920 may include the antenna 937 for each wireless communication method. In this case, the antenna switch 936 may be omitted from the configuration of the car navigation device 920.

The battery 938 supplies power to each block of the car navigation device 920 illustrated in Fig. 17 via a feed line which is partially illustrated by a broken line in Fig. 17. Furthermore, the battery 938 accumulates power supplied from the vehicle side.

In the car navigation device 920 illustrated in Fig. 17, the one or more components included in the processing unit 240 described with reference to Fig. 6 (acquisition unit 241, selection unit 243, notification unit 245, and/or communication control unit 247) may be implemented in the wireless communication interface 933. Alternatively, at least a part of these components may be implemented in the processor 921. As an example, it is possible that the car navigation device 920 mounts a module including a part or all of the wireless communication interface 933 (for example, BB processor 934) and/or the processor 921 and the one or more components are implemented in the module. In this case, the module may store a program for making the processor function as the one or more components (in other words, program making processor execute operations of one or more components) and execute the program. As another example, it is possible that a program for making the processor function as the one or more components is installed in the car navigation device 920 and the wireless communication interface 933 (for example, BB processor 934) and/or the processor 921 executes the program. As described above, the car navigation device 920 or the module may be provided as the device including the one or more components, and the program for making the processor function as the one or more components may be provided. Furthermore, a readable recording medium which has recorded the program may be provided.

Furthermore, in the car navigation device 920 illustrated in Fig. 17, for example, the wireless communication unit 220 described with reference to Fig. 6 may be implemented in the wireless communication interface 933 (for example, RF circuit 935). Furthermore, the antenna unit 210 may be implemented in the antenna 937. Furthermore, the storage unit 230 may be implemented in the memory 922.

Furthermore, the technology according to the present disclosure may be realized as an on-vehicle system (or vehicle) 940 including one or more blocks of the car navigation device 920 described above, the on-vehicle network 941, and a vehicle-side module 942. The vehicle-side module 942 generates vehicle-side data such as a vehicle speed, an engine speed, or failure information and outputs the generated data to the on-vehicle network 941.

### <<6. Conclusion>>

The embodiments of the present disclosure have been described above in detail with reference to Figs. 1 to 17.

According to the first embodiment, when communicating with a communication system which can provide one or more slices which provide communication services different from each other, the terminal device 200 acquires the information regarding the slice which can be provided by the communication system and selects a connection destination. Therefore, before connecting to the communication system, the terminal device can acquire the information regarding the slice which can be provided by the communication system which is a connection destination candidate. With this operation, the terminal device can efficiently select the communication system to be connected.

According to the second embodiment, in a case where the terminal device 200 is in the idle mode, the base station 100 transmits the paging message to the terminal device 200 by using the slice corresponding to the terminal device 200. With this operation, the terminal device 200 can receive the paging message with the slice, which has been set in advance and the like, corresponding to the terminal device 200. Therefore, in a case where the terminal device 200 operates as, for example, an MTC terminal, the terminal device 200 can receive the paging message by an operation similar to that in a case where the terminal device 200 is connected to an MTC-dedicated physical network.

In this way, according to the embodiments described above, when selecting the base station 100 or the CN 30 to be a connection destination, the terminal device 200 can perform a connection procedure and receive provision of a desired communication service after recognizing a provision capability of the slice in advance. Then, in a case where the terminal device 200 has transitioned to the idle state, the terminal device 200 can receive the paging message in the desired communication service. In this way, the system 1 can efficiently operate the plurality of logical networks, corresponding to various use cases, which is provided by the single physical network. With this structure, it is possible to satisfy the QoS and the like on the side of the terminal device 200 to the maximum.

The preferred embodiments of the present disclosure have been described in detail above with reference to the drawings. However, the technical scope of the present disclosure is not limited to the embodiments. It is obvious that a person who has normal knowledge in the technical field of the present disclosure can arrive at various variations and modifications in the scope of the technical ideas described in claims. It is understood that the variations and modifications naturally belong to the technical scope of the present disclosure.

For example, the first embodiment and the second embodiment can be appropriately combined. For example, the terminal device 200 which has received the provision of the information regarding the slice from the base station 100 and has connected to the network may set the slice to which the paging message is transmitted when the terminal device 200 transitions to the idle mode after that.

Furthermore, it is not necessary for executing the processing described with reference to the sequence diagrams in the present specification in the illustrated order. Some processing steps may be executed in parallel. Furthermore, an additional processing step may be adopted, and a part of the processing steps may be omitted.

Furthermore, the effects described in the present specification are merely illustrative or exemplary, and are not limited. That is, the technology according to the present disclosure may exhibit other effects obvious to those skilled in the art from the description in the present specification together with or instead of the above effects.

Note that the following configuration belongs to the technical scope of the present disclosure.
(1) A terminal device including:
   a communication control unit configured to control communication with a communication system which can provide one or more logical networks for respectively providing communication services different from each other;
   an acquisition unit configured to acquire information regarding the logical network which can be provided by the communication system; and
   a selection unit configured to select the communication system to be connected on the basis of the information regarding the logical network.
(2) The terminal device according to (1), in which
   the information regarding the logical network includes information indicating a kind of the logical network which can be provided or the logical network which cannot be provided.
(3) The terminal device according to (1) or (2), in which
   the information regarding the logical network includes information indicating a load state of the logical network.
(4) The terminal device according to any one of (1) to (3), in which
   the information regarding the logical network includes information indicating a usage rate of the logical network.
(5) The terminal device according to any one of (1) to (4), in which
   the information regarding the logical network includes information indicating a probability that the logical network is provided.
(6) The terminal device according to any one of (1) to (5), in which
   the acquisition unit transmits a request for the information regarding the logical network to the communication system.
(7) A base station including:
   a communication control unit configured to control communication with a terminal device which receives provision of the logical network selected from among one or more logical networks for respectively providing providable communication services different from each other; and
   a notification unit configured to notify the terminal device of information regarding the logical network which can be provided used by the terminal device to select a connection destination.
(8) The base station according to (7), in which
   the notification unit notifies the information regarding the logical network by using system information.
(9) The base station according to (7), in which
   the notification unit notifies the information regarding the logical network in response to a request from the terminal device.
(10) The base station according to any one of (7) to (9), in which
   the notification unit notifies the terminal device of information regarding a logical network which can be provided by a core network connected to the base station.
(11) The base station according to (10), in which
   the notification unit notifies the terminal device of information indicating whether or not the logical network which can be provided by the base station is combined with the logical network which can be provided by the core network.
(12) A control device including:
   a communication control unit configured to control communication of a terminal device which receives provision of the logical network selected from among one or more logical networks for respectively providing providable communication services different from each other; and
   a notification unit configured to notify the terminal device of information regarding the logical network which can be provided used by the terminal device to select a connection destination via a base station.
(13) A base station including:
   a communication control unit configured to control communication with a terminal device which receives provision of the logical network selected from among one or more logical networks for respectively providing providable communication services different from each other, in which
   the communication control unit transmits a paging message to the terminal device by using the logical network corresponding to the terminal device in a case where the terminal device is in an idle mode.
(14) The base station according to (13), in which
   the logical network corresponding to the terminal device is registered in advance.
(15) The base station according to (13) or (14), in which
   the logical network corresponding to the terminal device is set by the terminal device when the terminal device transitions to a Radio Resource Control (RRC) idle state.
(16) The base station according to any one of (13) to (15), in which
   the logical network corresponding to the terminal device includes the logical network connected to the terminal device before the terminal device transitions to the RRC idle state.
(17) The base station according to any one of (13) to (16), in which
   the logical network corresponding to the terminal device includes the logical network specified by a calling source.
(18) The base station according to any one of (13) to (17), further including:
   a notification unit configured to notify a core network of information regarding the logical network which can be provided.
(19) A control device including:
   a communication control unit configured to control communication of a terminal device which receives provision of the logical network selected from among one or more logical networks for respectively providing providable communication services different from each other, in which
   the communication control unit selects a base station which can provide the logical network corresponding to the terminal device as a base station for transmitting a paging message in a case where the terminal device is in an idle mode.
(20) The control device according to (19), in which
   the communication control unit determines whether or not an incoming call can be received in a case where the logical network used for transmission of the paging message is specified by a calling source regarding the incoming call to the terminal device.
(21) A method including:
   controlling communication with a communication system which can provide one or more logical networks for respectively providing communication services different from each other by a processor;
   acquiring information regarding the logical network which can be provided by the communication system; and
   selecting the communication system to be connected on the basis of the information regarding the logical network.
(22) A recording medium recording a program for making a computer function as:
   a communication control unit that controls communication with a communication system which can provide one or more logical networks for respectively providing communication services different from each other;
   an acquisition unit that acquires information regarding the logical network which can be provided by the communication system; and
   a selection unit that selects the communication system to be connected on the basis of the information regarding the logical network.
(23) A method including:
   controlling communication with a terminal device which receives provision of the logical network selected from among one or more logical networks for respectively providing providable communication services different from each other by a processor; and
   notifying the terminal device of information regarding the logical network which can be provided used by the terminal device to select a connection destination.
(24) A recording medium recording a program for making a computer function as:
   a communication control unit configured to control communication with a terminal device which receives provision of the logical network selected from among one or more logical networks for respectively providing providable communication services different from each other; and
   a notification unit configured to notify the terminal device of information regarding the logical network which can be provided used by the terminal device to select a connection destination.
(25) A method including:
   controlling communication of a terminal device which receives provision of the logical network selected from among one or more logical networks for respectively providing providable communication services different from each other by a processor; and
   notifying the terminal device of information regarding the logical network which can be provided used by the terminal device to select a connection destination via a base station.
(26) A recording medium recording a program for making a computer function as:
   a communication control unit that controls communication of a terminal device which receives provision of the logical network selected from among one or more logical networks for respectively providing providable communication services different from each other; and
   a notification unit that notifies the terminal device of information regarding the logical network which can be provided used by the terminal device to select a connection destination via a base station.
(27) A method including:
   controlling communication with a terminal device which receives provision of the logical network selected from among one or more logical networks for respectively providing providable communication services different from each other by a processor; and
   transmitting a paging message to the terminal device by using the logical network corresponding to the terminal device in a case where the terminal device is in an idle mode.
(28) A recording medium recording a program for making a computer function as:
   a communication control unit that controls communication with a terminal device which receives provision of the logical network selected from among one or more logical networks for respectively providing providable communication services different from each other, in which
   the communication control unit transmits a paging message to the terminal device by using the logical network corresponding to the terminal device in a case where the terminal device is in an idle mode.
(29) A method including:
   controlling communication of a terminal device which receives provision of the logical network selected from among one or more logical networks for respectively providing providable communication services different from each other by a processor, and
   selecting a base station which can provide the logical network corresponding to the terminal device as a base station for transmitting a paging message in a case where the terminal device is in an idle mode.
(30) A recording medium recording a program for making a computer function as:
   a communication control unit that controls communication of a terminal device which receives provision of the logical network selected from among one or more logical networks for respectively providing providable communication services different from each other, in which
   the communication control unit selects a base station which can provide the logical network corresponding to the terminal device as a base station for transmitting a paging message in a case where the terminal device is in an idle mode.

### REFERENCE SIGNS LIST

- 1: System
- 11: Cell
- 20: Core network
- 50: PDN
- 100: Base station
- 110: Antenna unit
- 120: Wireless communication unit
- 130: Network communication unit
- 140: Storage unit
- 150: Processing unit
- 151: Notification unit
- 153: Acquisition unit
- 155: Communication control unit
- 200: Terminal device
- 210: Antenna unit
- 220: Wireless communication unit
- 230: Storage unit
- 240: Processing unit
- 241: Acquisition unit
- 243: Selection unit
- 245: Notification unit
- 247: Communication control unit
- 300: Control device
- 310: Communication unit
- 320: Storage unit
- 330: Processing unit
- 331: Notification unit
- 333: Acquisition unit
- 335: Communication control unit

## Claims

1. A terminal device comprising:
a communication control unit configured to control communication with a communication system which can provide one or more logical networks for respectively providing communication services different from each other;
an acquisition unit configured to acquire information regarding the logical network which can be provided by the communication system; and
a selection unit configured to select the communication system to be connected on a basis of the information regarding the logical network.

2. The terminal device according to claim 1, wherein
the information regarding the logical network includes information indicating a kind of the logical network which can be provided or the logical network which cannot be provided.

3. The terminal device according to claim 1, wherein
the information regarding the logical network includes information indicating a load state of the logical network.

4. The terminal device according to claim 1, wherein
the information regarding the logical network includes information indicating a usage rate of the logical network.

5. The terminal device according to claim 1, wherein
the information regarding the logical network includes information indicating a probability that the logical network is provided.

6. The terminal device according to claim 1, wherein
the acquisition unit transmits a request for the information regarding the logical network to the communication system.

7. A base station comprising:
a communication control unit configured to control communication with a terminal device which receives provision of the logical network selected from among one or more logical networks for respectively providing providable communication services different from each other; and
a notification unit configured to notify the terminal device of information regarding the logical network which can be provided used by the terminal device to select a connection destination.

8. The base station according to claim 7, wherein
the notification unit notifies the information regarding the logical network by using system information.

9. The base station according to claim 7, wherein
the notification unit notifies the information regarding the logical network in response to a request from the terminal device.

10. The base station according to claim 7, wherein
the notification unit notifies the terminal device of information regarding a logical network which can be provided by a core network connected to the base station.

11. The base station according to claim 10, wherein
the notification unit notifies the terminal device of information indicating whether or not the logical network which can be provided by the base station is combined with the logical network which can be provided by the core network.

12. A control device comprising:
a communication control unit configured to control communication of a terminal device which receives provision of the logical network selected from among one or more logical networks for respectively providing providable communication services different from each other; and
a notification unit configured to notify the terminal device of information regarding the logical network which can be provided used by the terminal device to select a connection destination via a base station.

13. A base station comprising:
a communication control unit configured to control communication with a terminal device which receives provision of the logical network selected from among one or more logical networks for respectively providing providable communication services different from each other, wherein
the communication control unit transmits a paging message to the terminal device by using the logical network corresponding to the terminal device in a case where the terminal device is in an idle mode.

14. The base station according to claim 13, wherein
the logical network corresponding to the terminal device is registered in advance.

15. The base station according to claim 13, wherein
the logical network corresponding to the terminal device is set by the terminal device when the terminal device transitions to a Radio Resource Control (RRC) idle state.

16. The base station according to claim 13, wherein
the logical network corresponding to the terminal device includes the logical network connected to the terminal device before the terminal device transitions to a RRC idle state.

17. The base station according to claim 13, wherein
the logical network corresponding to the terminal device includes the logical network specified by a calling source.

18. The base station according to claim 13, further comprising:
a notification unit configured to notify a core network of information regarding the logical network which can be provided.

19. A control device comprising:
a communication control unit configured to control communication of a terminal device which receives provision of the logical network selected from among one or more logical networks for respectively providing providable communication services different from each other, wherein
the communication control unit selects a base station which can provide the logical network corresponding to the terminal device as a base station for transmitting a paging message in a case where the terminal device is in an idle mode.

20. The control device according to claim 19, wherein
the communication control unit determines whether or not an incoming call can be received in a case where the logical network used for transmission of the paging message is specified by a calling source regarding the incoming call to the terminal device.

21. A method comprising:
controlling communication with a communication system which can provide one or more logical networks for respectively providing communication services different from each other by a processor;
acquiring information regarding the logical network which can be provided by the communication system; and
selecting the communication system to be connected on a basis of the information regarding the logical network.

22. A recording medium recording a program for making a computer function as:
a communication control unit that controls communication with a communication system which can provide one or more logical networks for respectively providing communication services different from each other;
an acquisition unit that acquires information regarding the logical network which can be provided by the communication system; and
a selection unit that selects the communication system to be connected on a basis of the information regarding the logical network.

23. A method comprising:
controlling communication with a terminal device which receives provision of the logical network selected from among one or more logical networks for respectively providing providable communication services different from each other by a processor; and
notifying the terminal device of information regarding the logical network which can be provided used by the terminal device to select a connection destination.

24. A recording medium recording a program for making a computer function as:
a communication control unit that controls communication with a terminal device which receives provision of the logical network selected from among one or more logical networks for respectively providing providable communication services different from each other; and
a notification unit that notifies the terminal device of information regarding the logical network which can be provided used by the terminal device to select a connection destination.

25. A method comprising:
controlling communication of a terminal device which receives provision of the logical network selected from among one or more logical networks for respectively providing providable communication services different from each other by a processor; and
notifying the terminal device of information regarding the logical network which can be provided used by the terminal device to select a connection destination via a base station.

26. A recording medium recording a program for making a computer function as:
a communication control unit that controls communication of a terminal device which receives provision of the logical network selected from among one or more logical networks for respectively providing providable communication services different from each other; and
a notification unit that notifies the terminal device of information regarding the logical network which can be provided used by the terminal device to select a connection destination via a base station.

27. A method comprising:
controlling communication with a terminal device which receives provision of the logical network selected from among one or more logical networks for respectively providing providable communication services different from each other by a processor; and
transmitting a paging message to the terminal device by using the logical network corresponding to the terminal device in a case where the terminal device is in an idle mode.

28. A recording medium recording a program for making a computer function as:
a communication control unit that controls communication with a terminal device which receives provision of the logical network selected from among one or more logical networks for respectively providing providable communication services different from each other, wherein
the communication control unit transmits a paging message to the terminal device by using the logical network corresponding to the terminal device in a case where the terminal device is in an idle mode.

29. A method comprising:
controlling communication of a terminal device which receives provision of the logical network selected from among one or more logical networks for respectively providing providable communication services different from each other by a processor, and
selecting a base station which can provide the logical network corresponding to the terminal device as a base station for transmitting a paging message in a case where the terminal device is in an idle mode.

30. A recording medium recording a program for making a computer function as:
a communication control unit that controls communication of a terminal device which receives provision of the logical network selected from among one or more logical networks for respectively providing providable communication services different from each other, wherein
the communication control unit selects a base station which can provide the logical network corresponding to the terminal device as a base station for transmitting a paging message in a case where the terminal device is in an idle mode.
